# EUROPÄISCHE PATENTSCHRIFT

(11) **EP 3 651 091 B1**
(45) Veröffentlichungstag und Bekanntmachung des Hinweises auf die Patenterteilung: **26.04.2023**
(21) Anmeldenummer: 18290129.8
(22) Anmeldetag: 07.11.2018
(51) Int. Cl.: G06Q 10/08

(54) **LAGERVERWALTUNGSSYSTEM MIT POSITIONSERMITTLUNG VON LAGERGÜTERN UND ZUGEORDNETEN LAGERBEREICHEN**
STORAGE MANAGEMENT SYSTEM, HAVING POSITION DETECTING FUNCTION FOR ITEMS AND ASSOCIATED STORAGE AREAS
SYSTÈME DE GESTION DE STOCKAGE À DÉTERMINATION DE POSITION DES PRODUITS DE STOCKAGE ET DES ZONES DE STOCKAGE ASSOCIÉES

(43) Veröffentlichungstag der Anmeldung: 13.05.2020
(73) Patentinhaber: Adolf Würth GmbH & Co. KG, 74653 Künzelsau (DE); Würth International AG, 7000 Chur (CH)
(72) Erfinder: Marquette, Adrien, 74523 Schwäbisch Hall (DE)
(74) Vertreter: Gall, Ignaz

(56) Entgegenhaltungen:
- WO-A1-2016/166698
- WO-A1-2017/201490
- DE-A1-102013 222 263
- US-A1- 2014 129 395

## Beschreibung

Die Erfindung betrifft ein Lagerverwaltungssystem, ein Verfahren zum Verwalten eines Lagers, ein computerlesbares Speichermedium und ein Software-Programm.

Die logistische Handhabung großer Warenlager stellt herkömmlich besonders dann eine große Herausforderung dar, wenn die Warenmengen groß sind, die Warenarten stark diversifiziert sind, die Waren und der Warenbestand einem häufigen Wechsel unterworfen sind und die einzelnen Lagerorte der Waren räumlich weit auseinander liegen bzw. auch die Lagerorte häufig wechseln.

DE 10 2013 222 263 A1 offenbart ein Lagerverwaltungssystem, das Folgendes aufweist: eine Mehrzahl von mit Lagergütern zu bestückende Lagerbereiche; eine Mehrzahl von Lagergütern, die an den Lagerbereichen angeordnet sind; eine Mehrzahl von Lagerbereichsidentifikationseinrichtungen, von denen jede an einem zugeordneten der Lagerbereiche positioniert ist; eine Mehrzahl von Lagergüteridentifikationseinrichtungen, von denen jede an einem zugeordneten der Lagergüter positioniert ist; eine Ermittlungseinrichtung, die mittels Erkennens der Lagerbereichsidentifikationseinrichtungen und der Lagergüteridentifikationseinrichtungen und mittels Erkennens von Positionen der Lagerbereichsidentifikationseinrichtungen und der Lagergüteridentifikationseinrichtungen zum Ermitteln eines Datensatzes ausgebildet ist, der für jedes der Lagergüter und für jeden der Lagerbereiche indikativ dafür ist, welches Lagergut an welchem Lagerbereich positioniert ist.

US 2014/129395 A1 offenbart ein anderes Lagerverwaltungssystem.

WO 2017/201490 A offenbart ein Robotersystem mit Kameras, die Regalstrukturen identifizieren.

Solche Warenbestände werden herkömmlich rechnergestützt verwaltet. Dezentral kontrollieren Personen die Warenbestände und bestellen bei Bedarf lokal Waren nach. Dieses Verfahren ist träge, zeitintensiv, arbeitsintensiv und erfordert durch die lokale Bearbeitung einzelner Warenbestände viele dezentrale Ressourcen.

Es ist eine Aufgabe der vorliegenden Erfindung, ein ressourcenschonendes und fehlerrobust arbeitsfähiges Lagerverwaltungssystem bereitzustellen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist ein Lagerverwaltungssystem (das auch als Lagerverwaltungsanordnung bezeichnet werden kann) geschaffen, das eine Mehrzahl von mit Lagergütern zu bestückenden Lagerbereichen, eine Mehrzahl von Lagergütern, die an den Lagerbereichen angeordnet sind, eine Mehrzahl von Lagerbereichsidentifikationseinrichtungen (d.h. Identifikationseinrichtungen, die eine Identifizierung eines zugeordneten Lagerbereichs erlauben), von denen jede an einem zugeordneten der Lagerbereiche positioniert ist, wobei zumindest ein Teil der Lagerbereichsidentifikationseinrichtungen an einer räumlichen Begrenzung eines zugeordneten der Lagerbereiche angeordnet ist, wobei die Lagerbereichsidentifikationseinrichtungen aus einer Gruppe ausgewählt sind, die besteht aus einem Transponder, insbesondere einem RFID-Tag, einem optisch auslesbaren Code, insbesondere einem Barcode, einem QR-Code oder einem alphanumerischen Code, einer vorbestimmten geometrischen Figur, insbesondere einer vorbestimmt eingefärbten geometrischen Figur, und einer Anordnung mehrerer vorbestimmter geometrischer Figuren, insbesondere zur Definition äußerer Begrenzungen eines zugeordneten Lagerbereichs, eine Mehrzahl von Lagergüteridentifikationseinrichtungen (d.h. Identifikationseinrichtungen, die eine Identifizierung eines zugeordneten Lagerguts erlauben), von denen jede an einem zugeordneten der Lagergüter positioniert ist, eine in einem Prozessor ausgebildete Ermittlungseinrichtung, die mittels Erkennens der Lagerbereichsidentifikationseinrichtungen und der Lagergüteridentifikationseinrichtungen und mittels Erkennens von Positionen der Lagerbereichsidentifikationseinrichtungen und der Lagergüteridentifikationseinrichtungen zum Ermitteln eines Datensatzes ausgebildet ist, der für jedes der Lagergüter und für jeden der Lagerbereiche indikativ dafür ist, welches Lagergut an welchem Lagerbereich an welcher Position positioniert ist (insbesondere an welcher Position das jeweilige Lagergut positioniert ist und/oder an welcher Position der jeweilige Lagerbereich positioniert ist und/oder an welcher Position die jeweilige Lagergüteridentifikationseinrichtung positioniert ist und/oder an welcher Position die jeweilige Lagerbereichsidentifikationseinrichtung positioniert ist), und eine Erfasseinrichtung aufweist, die zum Erfassen von zumindest einen Teil der Lagerbereiche und zumindest einen Teil der Lagergüter abbildenden Erfassdaten, darstellend die Lagerbereichsidentifikationseinrichtungen und die Lagergüteridentifikationseinrichtungen, als Basis für das Ermitteln des Datensatzes ausgebildet ist, wobei die Erfasseinrichtung mindestens eine entlang der Lagerbereiche und entlang der Lagergüter verfahrbare und/oder schwenkbare Kamera zum Erfassen von Bilddaten und/oder mindestens ein entlang der Lagerbereiche und entlang der Lagergüter verfahrbares Transponderlesegerät zum Erfassen von Transponderdaten aufweist. Die Ermittlungseinrichtung ist ausgebildet, mittels Bilderkennung basierend auf mittels der mindestens einen Kamera erfassten Bilddaten zumindest einen Teil der Lagerbereiche und zumindest einen Teil der Lagergüter unter Verwendung der Lagerbereichsidentifikationseinrichtungen und der Lagergüteridentifikationseinrichtungen zu ermitteln.

Gemäß einem weiteren Ausführungsbeispiel der vorliegenden Erfindung ist ein Verfahren zum Verwalten eines Lagers mit einer Mehrzahl von mit Lagergütern zu bestückenden Lagerbereichen und einer Mehrzahl von Lagergütern, die an den Lagerbereichen angeordnet sind, bereitgestellt, wobei eine jeweilige von einer Mehrzahl von Lagerbereichsidentifikationseinrichtungen an einem zugeordneten der Lagerbereiche positioniert ist, und wobei eine jeweilige von einer Mehrzahl von Lagergüteridentifikationseinrichtungen an einem zugeordneten der Lagergüter positioniert ist, wobei das Verfahren ein Erkennen der Lagerbereichsidentifikationseinrichtungen und der Lagergüteridentifikationseinrichtungen und von Positionen der Lagerbereichsidentifikationseinrichtungen und der Lagergüteridentifikationseinrichtungen, ein Ermitteln eines Datensatzes basierend auf den erkannten Lagerbereichsidentifikationseinrichtungen und Lagergüteridentifikationseinrichtungen und ihrer Positionen durch eine in einem Prozessor ausgebildete Ermittlungseinrichtung, wobei der Datensatz für jedes der Lagergüter und für jeden der Lagerbereiche indikativ dafür ist, welches Lagergut an welchem Lagerbereich an welcher Position positioniert ist, und ein Erfassen von zumindest einen Teil der Lagerbereiche und zumindest einen Teil der Lagergüter abbildenden Erfassdaten durch eine Erfasseinrichtung aufweist, darstellend die Lagerbereichsidentifikationseinrichtungen und die Lagergüteridentifikationseinrichtungen, als Basis für das Ermitteln des Datensatzes, wobei die Erfasseinrichtung mindestens eine entlang der Lagerbereiche und entlang der Lagergüter verfahrbare und/oder schwenkbare Kamera zum Erfassen von Bilddaten und/oder mindestens ein entlang der Lagerbereiche und entlang der Lagergüter verfahrbares Transponderlesegerät zum Erfassen von Transponderdaten aufweist. Die Ermittlungseinrichtung ermittelt mittels Bilderkennung basierend auf mittels der mindestens einen Kamera erfassten Bilddaten zumindest einen Teil der Lagerbereiche und zumindest einen Teil der Lagergüter unter Verwendung der Lagerbereichsidentifikationseinrichtungen und der Lagergüteridentifikationseinrichtungen.

In einem computerlesbaren Speichermedium gemäß einem Ausführungsbeispiel der vorliegenden Erfindung ist ein Programm zum Verwalten eines Lagers mit einer Mehrzahl von mit Lagergütern zu bestückenden Lagerbereichen und einer Mehrzahl von Lagergütern, die an den Lagerbereichen angeordnet sind, gespeichert, welches Programm, wenn es von dem oder mehreren Prozessoren ausgeführt wird, die oben beschriebenen Verfahrensschritte aufweist bzw. durchführt.

Ein Software-Programm (zum Beispiel gebildet durch ein oder mehrere Computerprogramm-Elemente) gemäß einem Ausführungsbeispiel der vorliegenden Erfindung zum Verwalten eines Lagers mit einer Mehrzahl von mit Lagergütern zu bestückenden Lagerbereichen und einer Mehrzahl von Lagergütern, die an den Lagerbereichen angeordnet sind, weist die oben beschriebenen Verfahrensschritte auf (bzw. führt diese durch oder steuert diese), wenn es von dem oder mehreren Prozessoren ausgeführt wird.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Im Rahmen dieser Anmeldung kann unter dem Begriff "Lagerverwaltungssystem" insbesondere eine ganz oder teilweise automatisierte und vorzugsweise netzwerkbasierte Anordnung aus vorzugsweise miteinander kommunizierfähig gekoppelten oder koppelbaren Entitäten bzw. Knoten verstanden werden, die einen zu einem bestimmten Zeitpunkt bestehenden Bestand von Lagergütern an bzw. in Lagerbereichen qualitativ und/oder quantitativ erfassen kann und entsprechende Positionsinformation und Zuordnungsinformation von Lagergütern und Lagerbereichen ermitteln kann. Insbesondere kann ein solches Lagerverwaltungssystem optional - zum Beispiel selbsttätig und/oder benutzergesteuert - Nachbestellungen von Lagergütern auslösen. Ein solches Lagerverwaltungssystem bzw. Warenbestandsverwaltungssystem kann gegebenenfalls den erfassten Bestand und/oder daraus abgeleitete Information einer Bedienperson zugänglich machen und/oder basierend auf dem Ergebnis des Erfassens selbsttätig ein Ereignis auslösen.

Im Rahmen dieser Anmeldung kann unter dem Begriff "Lagergüter" insbesondere ein handhabbarer bzw. handelbarer physischer Körper verstanden werden, der gemeinsam mit vielen anderen Lagergütern einen Lagerbestand bildet, der einem fortlaufenden Wandel unterworfen ist. Beispiele für solche Lagergüter sind insbesondere technische Gegenstände oder Komponenten, wie zum Beispiel Werkzeugkomponenten (zum Beispiel Hammer, Schraubendreher, etc.) oder Verbrauchskomponenten (zum Beispiel Schrauben, Nägel, Dübel, etc.). Ein Bestand von solchen Lagergütern kann im Rahmen von einem exemplarischen Ausführungsbeispiel dem Wandel unterzogen sein, insbesondere hinsichtlich der Quantität von Lagergütern an einzelnen oder allen Lagerbereichen und/oder auch der Art bzw. dem Typ von Lagergütern. Dies bedeutet, dass neue Lagergüter (wie bereits vorliegende oder noch nicht vorliegende) zum Lagerbestand hinzugefügt werden können und/oder bestehende Lagergüter aus dem Lagerbestand entfernt werden können. Beispiele für Art bzw. Typ eines solchen Lagerguts sind Kofferinhalte, Maschinenkomponenten, der Inhalt eines Maschinenkoffers, Werkzeugeinlagen, Kanister, Dosen, Flaschen, Kartuschen, Tuben und/oder Schubladeninhalte.

Im Rahmen dieser Anmeldung kann unter dem Begriff "Lagerbereich" insbesondere eine Aufnahmevorrichtung verstanden werden, an und/oder in der bestimmungsgemäß Lagergüter aufgenommen sind oder aufgenommen werden können. Ein jeweiliger Lagerbereich und diesem jeweils zugehörige oder zugeordnete Lagergüter können aufeinander angepasst sein, insbesondere hinsichtlich Dimension und/oder Form. Infolge einer solchen spezifischen Anpassung zwischen Lagergut und zugeordnetem Lagerbereich kann einem bestimmten Lagerbereich eine definierte Anzahl von Belegungsplätzen zugeordnet sein, von denen jeder zum Aufnehmen eines oder einer bestimmten Menge von Lagergütern des vorgegebenen Typs ausgebildet sein kann. Es ist möglich, dass ein Lagerbereich nur zum Aufnehmen eines spezifischen Typs von Lagergütern ausgebildet ist (zum Beispiel, wenn der Lagerbereich gleichartige Kompartments aufweist, von denen jedes so geformt und dimensioniert ist, dass zum Beispiel nur eine ganz speziell geformte und dimensionierte Warenverpackung oder Ware selbst in dem jeweiligen Kompartment untergebracht werden kann). Es ist aber auch möglich, dass ein Lagerbereich zum Aufnehmen unterschiedlicher Typen von Lagergütern ausgebildet ist (zum Beispiel, wenn der Lagerbereich unterschiedliche Typen von Kompartments aufweist, von denen jeder Typ so geformt und dimensioniert ist, dass zum Beispiel eine ganz speziell geformte und dimensionierte Warenverpackung oder Ware selbst in dem jeweiligen Kompartment des jeweiligen Typs untergebracht werden kann). Ein Beispiel hierfür ist eine Werkzeugkiste mit vorgeformten und unterschiedlich dimensionierten und/oder geformten Aufnahmemulden zum Aufnehmen spezieller Werkzeuge.

Unter "Lagerbereichsidentifikationseinrichtungen" können insbesondere alle Merkmale eines Lagerbereichs oder an einen Lagerbereich angebrachte Merkmale verstanden werden, die mittels der Erfasseinrichtung erfassbar sind und eine (insbesondere eindeutige) Zuordnung bzw. Identifikation des Lagerbereichs anhand der detektierbaren Lagerbereichsidentifikationseinrichtung ermöglichen. Zum Beispiel können die genannten Lagerbereichsidentifikationseinrichtungen Transponder mit einem vorzugsweise eindeutigen Identifier sein. Es ist aber auch möglich, einen Lagerbereich dadurch (insbesondere eindeutig) zu identifizieren, dass der Lagerbereich eine von (insbesondere allen) anderen Lagerbereichen unterschiedliche Form, Farbe und/oder sonstige Charakteristik hat.

Im Rahmen der vorliegenden Anmeldung kann unter dem Begriff "Lagergüteridentifikationseinrichtung" insbesondere jedes Merkmal verstanden werden, das eine (insbesondere eindeutige) Identifizierung eines zugeordneten Lagerguts ermöglicht. Dies kann zum Beispiel durch einen (insbesondere eindeutigen) Identifizierer erfolgen, wie zum Beispiel einen (insbesondere einmaligen) QR-Code, der das zugehörige Lagergut (insbesondere eindeutig) identifiziert. Somit kann eine Lagergüteridentifikationseinrichtung an ein zugehöriges Lagergut angebracht sein oder ein intrinsisches Merkmal des Lagerguts sein, das dessen (insbesondere eindeutige) Identifizierung ermöglicht.

Gemäß einem exemplarischen Ausführungsbeispiel der Erfindung ist ein vorzugsweise vollautomatisch betreibbares und sehr fehlerrobustes Lagerverwaltungssystem geschaffen, bei dem eine (insbesondere eindeutige) gegenseitige Zuordnung von Lagergütern und zugehörigen Lagerbereichen zum Aufnehmen bzw. Lagern eines zugehörigen Lagerguts durch eine zugehörige Lagerbereichsidentifikationseinrichtung bzw. eine zugehörige Lagergüteridentifikationseinrichtung ermöglicht ist. Darüber hinaus kann bei dem Lagerverwaltungssystem eine Positionsbestimmung einzelner Lagergüter und einzelner Lagerbereiche erfolgen und entsprechende Positionsinformation den einander zugeordneten Lagergut/Lagerbereich-Gruppen zugeordnet werden. Dann kann selbst für komplexe Lager in Form eines zum Beispiel leicht durchsuchbaren elektronischen Datensatzes eine Zuordnung erfolgen, welches Lagergut an welchen Lagerbereich positioniert ist und welche Position das Lagergut und/oder der zugeordnete Lagerbereich hat. Dies ermöglicht einen eindeutigen und einfachen Zugriff auf jedes Lagergut eines komplexen Lagers und erleichtert die Verwaltung komplexer Lager mit riesigen Mengen von Lagergütern und Lagerbereichen. Indem ein Datensatz ermittelt wird, der anhand der Lagergüteridentifikationseinrichtungen bzw. der Lagerbereichsidentifikationseinrichtungen eine eindeutige Zuordnung jedes Lagerguts zu einem zugeordneten Lagerbereich vornimmt und zudem die Position jedes Lagerguts und jedes Lagerbereichs in Form von Datenelementen speichern kann, kann zu jedem Zeitpunkt schnell, einfach und fehlerrobust ermittelt werden, welches Lagergut wo und in welchem Lagerbereich vorhanden ist. Benutzeraktivitäten im Zusammenhang mit einer entsprechenden Lagerverwaltung sind nicht zwingend erforderlich. Ein solches Lagerverwaltungssystem kann jederzeit durch das Hinzufügen von Lagerbereichen und/oder Lagergütern erweitert werden bzw. durch das Entnehmen von Lagergütern und/oder Lagerbereichen reduziert werden. Anders ausgedrückt kann der Datensatz, der von der Ermittlungseinrichtung ermittelt wird, die Koordinaten aller Lagergüter und Lagerbereiche enthalten und miteinander im Sinne einer Zuordnung von Lagergütern zu Lagerbereichen verknüpfen. Dadurch braucht nicht mehr Information gespeichert zu werden, als für ein eindeutiges und fehlerfreies Lagerverwalten nötig ist. Ein Lagerverwaltungssystem gemäß einem exemplarischen Ausführungsbeispiel der Erfindung ist sowohl hardwaretechnisch als auch softwaretechnisch als auch hinsichtlich der zu verwaltenden Datenmengen ressourcensparend.

Im Weiteren werden zusätzliche exemplarische Ausführungsbeispiele des Lagerverwaltungssystems, des Verfahrens, des computerlesbaren Speichermediums und des Software-Programms beschrieben.

Gemäß einem exemplarischen Ausführungsbeispiel kann das Lagerverwaltungssystem eine Abfrageeinrichtung aufweisen, die eingerichtet ist, für jedes der Lagergüter mittels einer Abfrage bei der Ermittlungseinrichtung mindestens einen zugehörigen Lagerbereich abzufragen, an dem ein jeweiliges Lagergut positioniert ist und/oder für jeden der Lagerbereiche mittels einer Abfrage bei der Ermittlungseinrichtung mindestens ein zugehöriges Lagergut abzufragen, das an dem jeweiligen Lagerbereich positioniert ist. Eine solche Abfrage kann zum Beispiel wünschenswert sein, wenn zur Ausführung einer Aufgabe die Entnahme eines Lagerguts aus dem Lager erforderlich ist. Mittels einer einfachen Datenbankabfrage kann die Position und der Lagerbereich des Lagerguts ermittelt werden und zum Beispiel ein Roboter zum Transport des identifizierten und abgefragten Lagerguts zu einer Weiterverarbeitungsstelle angesteuert werden.

Gemäß einem exemplarischen Ausführungsbeispiel können die Lagergüter aus einer Gruppe ausgewählt sein, die besteht aus Werkzeugen, Fluidquellen, C-Teilen, Gutscheinen für eine Ware und/oder Dienstleistung und einem Dashbuttom. Auch Kleinteile oder C-Teiie (d.h. nach der einem Fachmann bekannten ABC-Analyse klassifizierte Waren, die einen relativ niedrigen Wertanteil von zum Beispiel 5 % bis 10 % einnehmen, aber einen relativ hohen Mengenanteil von zum Beispiel 50 % bis 70 % haben, beispielsweise Schrauben, Muttern) können auf diese Weise als Lagergut verwaltet werden. Unter einem Dashbuttom kann insbesondere ein zum Beispiel daumengroßer Druckknopf verstanden werden, der von einem Benutzer betätigt werden kann, um über ein Kommunikationsnetzwerk (insbesondere mittels WLAN) ein Kommandosignal an einen kommunizierfähig gekoppelten Knoten abzuschicken. Durch bloßes Betätigen eines Dashbuttoms kann zum Beispiel eine Nachbestellung eines Lagerguts ausgelöst werden, das dem Dashbuttom zugeordnet ist. Es können aber auch alle anderen Arten von Lagergütern mit dem Lagerverwaltungssystem verwaltet werden, sofern diese mit einer Lagergüteridentifikationseinrichtung verbunden werden können oder aufgrund ihrer eigenen Charakteristik (Form, Farbe, Beschriftung, etc.) eine intrinsische Lagergüteridentifikationseinrichtung enthalten.

Gemäß einem exemplarischen Ausführungsbeispiel können die Lagerbereiche aus einer Gruppe ausgewählt sein, die besteht aus einem Regal oder einem Teil eines Regals (insbesondere einem Regalboden eines Regals), einem Werkstattwagen oder einem Teil eines Werkstattwagens (insbesondere einer Arbeitsfläche oder Schublade des Werkzeugwagens), einem Koffer oder einem Teil eines Koffers (insbesondere einem Kofferfach eines Koffers), einem wandmontierbaren Hängeplatz oder einem Teil eines wandmontierbaren Hängeplatzes, und einer Lagerbox oder einem Teil einer Lagerbox. Alle anderen Arten von Lagerbereichen sind ebenfalls möglich, sofern diese eine Lagerbereichsidentifikationseinrichtung tragen können oder aufgrund ihrer intrinsischen Eigenschaften als Lagerbereichsidentifikationseinrichtung fungieren können.

Die Lagerbereichsidentifikationseinrichtungen sind aus einer Gruppe ausgewählt, die besteht aus einem Transponder (insbesondere einem RFID-Tag), einem optisch auslesbaren Code (insbesondere einem Barcode, einem QR-Code oder einem alphanumerischen Code) und einer vorbestimmten geometrischen Figur (insbesondere einer vorbestimmt eingefärbten geometrischen Figur). Insbesondere kann eine Lagerbereichsidentifikationseinrichtung auch durch eine Anordnung mehrerer vorbestimmter geometrischer Figuren ausgebildet sein, die vorteilhaft zur Definition äußerer Begrenzungen eines Lagerbereichs dienen, herangezogen werden können bzw. ausreichend sind. Es ist also möglich, als Lagerbereichsidentifikationseinrichtung eine entsprechende körperliche Struktur an dem entsprechenden Lagerbereich anzubringen. Beispiele hierfür sind zum Beispiel Transponder, die auf den zugehörigen Lagerbereich aufgeklebt werden können und mittels des Transponderlesegeräts ausgelesen werden können. Es ist aber auch zusätzlich möglich, zur Lagerbereichsidentifikation abstrakte Information zu verwenden, wie zum Beispiel einen mittels der Kamera erfassbaren Umriss, der mit Methoden der automatischen Bilderkennung erkannt werden kann und zur Identifizierung des Lagerbereichs herangezogen werden kann. Hierbei handelt es sich um eine intrinsische Lagerbereichsidentifikationseinrichtung, die durch die Charakteristik des Lagerbereichs selber definiert ist, ohne dass ein externer physischer Körper hierfür an dem Lagerbereich angebracht werden muss.

Gemäß einem exemplarischen Ausführungsbeispiel können die Lagergüteridentifikationseinrichtungen aus einer Gruppe ausgewählt sein, die besteht aus einem Transponder (insbesondere einem RFID-Tag), einem optisch auslesbaren Code (insbesondere einem Barcode, einem QR-Code oder einem alphanumerischen Code) und einer vorbestimmten geometrischen Figur (insbesondere einer vorbestimmt eingefärbten geometrischen Figur). Bei den Lagergüteridentifikationseinrichtungen kann also zwischen physischen Strukturen (zum Beispiel Transponder) unterschieden werden, die an dem zu identifizierenden Lagergut angebracht werden, und intrinsischen Eigenschaften des Lagerguts zu dessen Identifizierung selbst. Bei einer intrinsischen Lagergüteridentifikationseinrichtung kann es sich also um eine intrinsische Eigenschaft des Lagerguts selbst handeln, die sensorisch erfasst werden kann und dessen Identifizierung ermöglicht (zum Beispiel dadurch, dass die Ermittlungseinrichtung Methoden der Bildverarbeitung einsetzt, um anhand eines Bilds des Lagerguts dieses zu identifizieren, beispielsweise anhand einer Beschriftung oder eines Umrisses).

Das Lagerverwaltungssystem weist die Erfasseinrichtung auf, die zum Erfassen von zumindest einen Teil der Lagerbereiche und zumindest einen Teil der Lagergüter abbildenden Erfassdaten als Basis für das Ermitteln des Datensatzes ausgebildet ist. Insbesondere stellen die Erfassdaten die Lagerbereichsidentifikationseinrichtungen und die Lagergüteridentifikationseinrichtungen dar. Eine solche Erfasseinrichtung kann also Bilddaten der Lagergüter und/oder der Lagerbereiche aufnehmen, um auf diesen die Lagerbereichsidentifikationseinrichtungen bzw. Lagergüteridentifikationseinrichtungen zu identifizieren. Dadurch ist auch eine Identifizierung der den Bilddaten zugehörigen Lagergüter bzw. Lagerbereiche ermöglicht. Wenn bei Aufnahme eines jeweiligen Bilds auch die zugehörigen Koordinaten und/oder Orientierung der Erfasseinrichtung und/oder der bildtechnisch erfassten Lagergütern und/oder Lagerbereiche gespeichert werden, ist nach Identifizierung von Lagergütern und/oder Lagerbereichen auf den Bilddaten auch eine Ermittlung der zugehörigen Lagergutposition bzw. Lagerbereichsposition möglich.

Die Erfasseinrichtung weist die mindestens eine entlang der Lagerbereiche verfahrbare und/oder schwenkbare Kamera zum Erfassen von Bilddaten und/oder das mindestens eine entlang der Lagerbereiche verfahrbares Transponderlesegerät zum Erfassen von Transponderdaten aufweisen. Die in Längsrichtung verfahrbare (in ein, zwei oder drei Raumrichtungen) und/oder drehbare Kamera ermöglicht es also, die Positionen der Lagergüter und der Lagerbereiche in einfacher Weise zu erfassen. Hierfür kann auch die Position der Kamera beim Aufnehmen bestimmter Bilddaten herangezogen werden.

Das Auslesen von Transpondern kann, wie das Auslesen mittels der Kamera, kontaktlos erfolgen und ist ebenfalls sehr fehlerrobust. Da beim Auslesen eines Transponders das Transponderlesegerät zuvor in einen Lesbarkeitsabstand zu der zugehörigen Lagerbereichsidentifikationseinrichtung oder Lagergüteridentifikationseinrichtung gebracht werden muss, kann dadurch ein fehlerhaftes Erfassen falscher Transponder zuverlässig vermieden werden.

Die Ermittlungseinrichtung ist ausgebildet, mittels Bilderkennung basierend auf mittels der mindestens einen Kamera erfassten Bilddaten zumindest einen Teil der Lagerbereiche und zumindest einen Teil der Lagergüter zu ermitteln, insbesondere unter Verwendung der Lagerbereichsidentifikationseinrichtungen und/oder der Lagergüteridentifikationseinrichtungen. Als Basis für die durchgeführte Bilderkennung kann die Ermittlungseinrichtung auf eine Datenbank zurückgreifen, in der Musterdaten von erwarteten Lagerbereichen und/oder Lagergütern abgelegt sein kann. Die Ermittlungseinrichtung kann dann auf den erfassten Bildern entsprechende Muster suchen und dadurch Lagerbereiche und/oder Lagergüter identifizieren.

Gemäß einem exemplarischen Ausführungsbeispiel kann die Ermittlungseinrichtung eingerichtet sein, als zumindest einen Teil des Datensatzes für zumindest einen Teil der Lagergüter und für zumindest einen Teil der Lagerbereiche Raumkoordinaten zu identifizieren, insbesondere dreidimensionale Raumkoordinaten. Indem zwei- oder dreidimensionale Koordinaten (zum Beispiel kartesische Koordinaten oder Kugelkoordinaten) für die einzelnen Lagergüter bzw. Lagerbereiche ermittelt und abgelegt werden, kann zum Beispiel ein Robotersystem einzelne Lagergüter von zugeordneten Lagerbereichen holen. Hierfür ist dem Roboter lediglich die dreidimensionale Raumkoordinate des gewünschten Lagerguts zu übermitteln. Mit Vorteil ist es auch möglich, einen Satz von Raumkoordinaten für zumindest einen Teil der Lagergüter und/oder für zumindest einen Teil der Lagerbereiche zu erfassen bzw. zu übermitteln, welche nicht nur den Aufenthaltsort, sondern auch die physischen Grenzen des jeweiligen Lagerguts und/oder des jeweiligen Lagerbereichs angeben.

Gemäß einem exemplarischen Ausführungsbeispiel kann die Ermittlungseinrichtung eingerichtet sein, mittels der Erfasseinrichtung erfasste zweidimensionale Raumkoordinaten von zumindest einem Teil der Lagergüter und/oder von zumindest einen Teil der Lagerbereiche in dreidimensionale Raumkoordinaten von zumindest einem Teil der Lagergüter und/oder von zumindest einem Teil der Lagerbereiche umzurechnen. Mittels Methoden der Triangulation und/oder anderer mathematischer Modelle ist es möglich, aus einem Satz zweidimensionaler Raumkoordinaten dreidimensionale Raumkoordinaten zu bestimmen. Sind die dreidimensionalen Raumkoordinaten ermittelt und abgelegt, ist ein Zugriff auf die einzelnen Lagerbereiche bzw. Lagergüter mit noch höherer Genauigkeit möglich.

Gemäß einem exemplarischen Ausführungsbeispiel kann die Ermittlungseinrichtung eingerichtet sein, Raumkoordinaten der Lagergüter Raumkoordinaten eines jeweils zugehörigen Lagerbereichs zuzuordnen. Wenn Raumkoordinaten der Lagergüter Raumkoordinaten der zugeordneten Lagerbereiche zugeordnet sind, kann ein Roboter zum Beispiel nach Anfahren eines bestimmten Lagerbereichs in einem Großlager direkt auf eine bestimmte Position in diesem Lagerbereich zugreifen, um ein dort befindliches Lagergut zu entnehmen. Die Zuordnung von Raumkoordinaten von Lagergütern zu Raumkoordinaten von Lagerbereichen ist daher besonders vorteilhaft.

Gemäß einem exemplarischen Ausführungsbeispiel kann das Lagerverwaltungssystem eine Benutzerschnittstelle (die auch als Benutzerendgerät bezeichnet werden kann) zum Anzeigen von zumindest einem Teil des Datensatzes aufweisen. Alternativ oder ergänzend kann die Benutzerschnittstelle bzw. das Benutzerendgerät zum Eingeben von zumindest einem Steuerkommando zum Steuern des Lagerverwaltungssystems ausgebildet sein. Eine solche Benutzerschnittstelle kann eine Anzeigeeinrichtung und/oder eine Eingabeeinrichtung aufweisen. Eine Anzeigeeinrichtung erlaubt die grafische Anzeige zumindest eines Lagerbereichs und/oder zumindest eines Lagerguts in visuell erfassbarer Form. Eine Eingabeeinrichtung erlaubt die Eingabe von Benutzerkommandos zum Steuern des Lagerverwaltungssystems.

Gemäß einem exemplarischen Ausführungsbeispiel kann die Benutzerschnittstelle zum Anzeigen von zumindest einem Teil des Datensatzes mittels Augmented Reality ausgebildet sein, insbesondere an einer portablen oder tragbaren ("wearable") Benutzerschnittstelle. Unter Augmented Reality (oder erweiterter Realität) kann insbesondere die computergestützte Erweiterung der Realitätswahrnehmung durch die Bereitstellung zusätzlicher Informationen verstanden werden. Diese Information kann alle menschlichen Sinnesmodalitäten ansprechen. Insbesondere kann unter erweiterter Realität die visuelle Darstellung von Informationen verstanden werden, also die Ergänzung von Bildern oder Videos mit computergenerierten Zusatzinformationen oder virtuellen Objekten mittels Einblendung bzw. Überlagerung. Indem Elemente von Augmented Reality in die Anzeige von Lagergütern und/oder Lagerbereichen aufgenommen werden, kann ein menschlicher Benutzer besonders intuitiv angeleitet werden, das Lager zu verwalten. Zum Beispiel kann hierfür eine portable Anzeigeeinrichtung, beispielsweise ein Handheldgerät wie ein Smartphone, zum Einsatz kommen. Es ist auch möglich, als Wearable-Anzeigeeinrichtung eine Augmented-Reality-Brille oder dergleichen zu implementieren. Wenn ein Benutzer, der eine solche Wearable-Anzeigeeinrichtung trägt oder eine solche portable Anzeigeeinrichtung mit sich führt, die Anzeigeeinrichtung auf einen Teil des Lagers richtet, kann dem Benutzer auf der Anzeigeeinrichtung ein aktuell aufgenommenes Bild dieses Lagerbereichs und/oder dieses Lagerguts angezeigt werden, ergänzt um zusätzliche Information (zum Beispiel über das Lagergut und/oder den Lagerbereich), um dem Benutzer die Lagerverwaltung zu vereinfachen.

Gemäß einem exemplarischen Ausführungsbeispiel kann zumindest ein Teil der Lagerbereichsidentifikationseinrichtungen eine räumliche Begrenzung eines zugeordneten der Lagerbereiche definieren. Zum Beispiel können die Außengrenzen eines rechteckigen Regalfachs durch vier rote Punkte in den Eckbereichen definiert werden. Durch Erkennung dieser Lagerbereichsidentifikationseinrichtungen kann dann auch die Ausdehnung eines entsprechenden Lagerbereichs in den Datensatz aufgenommen werden. Für zugehörige Lagergüter kann dann nicht nur definiert werden, dass diese in diesem Lagerbereich befindlich sind, sondern auch an welcher Position in diesem Lagerbereich sie befindlich sind.

Gemäß einem exemplarischen Ausführungsbeispiel kann das Lagerverwaltungssystem eine Nachbestelleinrichtung aufweisen, die ausgebildet ist, eine Nachbestellung von zumindest einem der Lagergüter auszulösen, wenn ein vorbestimmtes Nachbestellereignis erfasst wird. Mit dem beschriebenen Lagerverwaltungssystem kann auch die Nachbestellung, das heißt die Ergänzung des Lagers, vereinfacht werden. Hierfür kann eine Nachbestelleinrichtung ein vorbestimmtes Nachbestellereignis erfassen und dann das Nachbestellen (zum Beispiel über ein Netzwerk wie das Internet) auslösen.

Gemäß einem exemplarischen Ausführungsbeispiel kann das Vorliegen eines Nachbestellereignisses mittels der Erfasseinrichtung erfassbar sein. Die Erfasseinrichtung, welche Lagergüter und/oder Lagerbereiche erfasst, kann auch das Nichtvorliegen eines Lagerguts oder von mehreren Lagergütern in einem Lagerbereich erfassen. Zum Beispiel kann die Erfasseinrichtung erfassen, dass alle Lagergüter eines Lagerbereichs vergriffen sind oder dass sich die Restmenge von Lagergütern in dem Lagerbereich unterhalb eines vorbestimmten Schwellwerts befindet. Wenn dies (zum Beispiel optisch) erfasst worden ist, kann dies der Nachbestelleinrichtung gemeldet werden. Ein für die Nachbestellung Verantwortlicher kann dann die Nachbestellung auslösen.

Gemäß einem exemplarischen Ausführungsbeispiel kann das Vorliegen eines Nachbestellereignisses in Form einer Benutzeraktivität erfassbar sein. Insbesondere kann mittels einer mittels der Erfasseinrichtung erfassten vorbestimmten Benutzergeste das Vorliegen eines Nachbestellereignisses erfassbar sein. Zum Beispiel kann eine Nachbestellung ausgelöst werden, indem ein Benutzer mit einer vordefinierten bzw. vereinbarten Benutzergeste auf ein nachzubestellendes Lagergut und/oder einen einem nachzubestellenden Lagergut zugehörigen Lagerbereich zeigt. Es ist also zum Beispiel auch möglich, dass ein Benutzer, der das Fehlen von Lagergütern in einem Lagerbereich erkennt, die Nachbestellung auslöst. Hierfür kann zum Beispiel eine vorbestimmte Benutzergeste ausreichend sein, die von der Erfasseinrichtung erfasst wird. Als vorbestimmte Benutzergeste kann zum Beispiel eine bestimmte Handstellung (zum Beispiel ein ausgestreckter Zeigefinger des Benutzers, der auf einen Lagerbereich zeigt, der von zugehörigen Lagergütern entleert ist) oder eine bestimmte Handbewegung (zum Beispiel ein Schnipsen mit der Hand, die auf einen entleerten Lagerbereich zeigt) eingesetzt werden. Auf besonders einfache und intuitive Weise kann dadurch eine Lagerergänzung ausgelöst werden.

Gemäß einem exemplarischen Ausführungsbeispiel kann das vorbestimmte Nachbestellereignis aus einer Gruppe ausgewählt sein, die besteht aus dem Absinken einer Anzahl verbleibender Lagergüter an mindestens einem zugeordneten Lagerbereich unter einen vorbestimmten Schwellwert, einer für das Entnehmen einer Anzahl von Lagergütern aus mindestens einem zugeordneten Lagerbereich indikativen Information, einem benutzerseitigen Nachbestellkommando und einer einen Entnahmebedarf anzeigenden Information. Natürlich sind auch andere Nachbestellereignisse definierbar, deren Vorliegen das Auslösen einer Nachbestellung triggern kann.

Gemäß einem exemplarischen Ausführungsbeispiel kann die Ermittlungseinrichtung zum Ermitteln des Datensatzes derart ausgebildet sein, dass der Datensatz für jedes der Lagergüter indikativ dafür ist, in welchem Teilbereich eines jeweiligen Lagerbereichs das jeweilige Lagergut positioniert ist. Mit Vorteil kann daher nicht nur jedem Lagergut ein zugehöriger Lagerbereich (zum Beispiel ein Regalboden eines Regals) zugeordnet sein, sondern räumliche Zusatzinformation dahingehend enthalten, in welchem Teilbereich des Lagerbereichs das jeweilige Lagergut lokalisiert ist. Zum Beispiel kann auf einem Regalboden eine Mehrzahl von Lagerboxen stehen, die Lagergüter aufnehmen. Der Datensatz kann dann einem jeweiligen Lagergut nicht nur den zugehörigen Regalboden als Lagerbereich, sondern zusätzlich einen Teilbereich des Regalbodens zuordnen, an dem das Lagergut positioniert ist. Dadurch kann die Zuordnung von Lagergütern zu bestimmten Positionen in dem Lagerverwaltungssystem um eine Hierarchiestufe erweitert und damit verfeinert werden.

Gemäß einem exemplarischen Ausführungsbeispiel kann das Lagerverwaltungssystem eine Benutzerorteinrichtung aufweisen, die zum Orten (d.h. zur Positionsbestimmung) mindestens eines menschlichen Benutzers im Bereich des Lagerverwaltungssystems und zum Steuern des Lagerverwaltungssystems derart ausgebildet ist, dass zumindest bewegbare Komponenten des Lagerverwaltungssystems nur unter Wahrung eines (zum Beispiel vorgebbaren räumlichen) Sicherheitsabstands zu einem georteten Benutzer positioniert werden. Wie oben beschrieben, kann das Lagerverwaltungssystem bewegliche Komponenten aufweisen, zum Beispiel die räumlich verfahrbare bzw. drehbare Kamera zum Erfassen von Lagergütern und/oder Lagerbereichen und/oder ein Roboter, der Lagergüter zu einem zugehörigen Lagerbereich verbringt oder von einem zugehörigen Lagerbereich entfernt. Um zu vermeiden, dass es zu unerwünschten Zusammenstößen zwischen menschlichen Benutzern und solchen bewegten Komponenten kommt, kann die Benutzerorteinrichtung die im Bereich des Lagerverwaltungssystems arbeitenden Benutzer erkennen und die beweglichen Komponenten entsprechend ansteuern, um Kollisionen zu verhindern. Die Betriebssicherheit beim Betrieb des Lagerverwaltungssystems kann dadurch signifikant erhöht werden.

Gemäß einem exemplarischen Ausführungsbeispiel kann die Erfasseinrichtung eingerichtet sein, Erfassdaten ausschließlich in einem Raumbereich zu erfassen, der durch die Lagerbereiche und Lagergüter begrenzt wird. Somit kann ein Raumbereich entsprechend einem zugehörigen Lagerbereich definiert werden, auf welchen die Erfasstätigkeit von Kameras der Erfasseinrichtung beschränkt ist, Auf diese Weise kann sichergestellt werden, dass eine Erfassung lediglich im Lagerbereich bzw. im Bereich der Lagergüter erfolgt und somit keine Überwachung anderer Lagerabschnitte des Lagers erfolgt. Dies ist aus Gründen des Datenschutzes, Arbeitsschutzes und zur Wahrung von Betriebsgeheimnissen vorteilhaft und kann durch die beschriebene technische Ausgestaltung des Lagerverwaltungssystems erreicht werden.

Im Folgenden werden exemplarische Ausführungsbeispiele der vorliegenden Erfindung mit Verweis auf die folgenden Figuren detailliert beschrieben.
Figur 1 zeigt ein Lagerverwaltungssystem gemäß einem exemplarischen Ausführungsbeispiel der Erfindung.
Figur 2 zeigt eine räumliche Ansicht von Lagerbereichen in Form eines Regals eines Lagerverwaltungssystems gemäß einem exemplarischen Ausführungsbeispiel der Erfindung.
Figur 3 und Figur 4 zeigen Teile eines Lagerverwaltungssystems gemäß einem exemplarischen Ausführungsbeispiel der Erfindung.
Figur 5 zeigt eine logische Hierarchie von Lagerbereichen und zugeordneten Lagergütern gemäß einem exemplarischen Ausführungsbeispiel der Erfindung.
Figur 6 zeigt eine portable Benutzerschnittstelle gemäß einem exemplarischen Ausführungsbeispiel der Erfindung in verschiedenen Betriebszuständen während Durchführung einer Nachbestellung.
Figur 7 zeigt eine portable Benutzerschnittstelle gemäß einem anderen exemplarischen Ausführungsbeispiel der Erfindung in verschiedenen Betriebszuständen während Durchführung einer Nachbestellung.
Figur 8 bis Figur 11 zeigen eine portable Benutzerschnittstelle des Lagerverwaltungssystems gemäß einem exemplarischen Ausführungsbeispiel der Erfindung in unterschiedlichen Betriebszuständen während Durchführens einer Augmented Reality Applikation.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte von Ausführungsbeispielen der Erfindung erläutert werden:
Gemäß einem exemplarischen Ausführungsbeispiel der Erfindung ist ein Lagerverwaltungssystem geschaffen, bei dem ein Lagerbereich definiert werden kann, an dem Lagergut gelagert ist (beispielsweise ein Regal mit Regalböden). Der Lagerbereich kann durch eine Lagerbereichsidentifkationseinrichtung gekennzeichnet werden. Dies kann zum Beispiel aktiv durch einen QR-Code, einen Barcode, eine geometrische Figur (zum Beispiel ein Dreieck, ein roter Punkt), etc. vorgenommen werden. Die Identifizierung kann aber auch automatisch durchgeführt werden, zum Beispiel durch eine Bilderkennungsoftware, die einen bestimmten Lagerbereich (zum Beispiel ein Regal) erkennt, zum Beispiel durch Verfahren der Mustererkennung.

Ferner ist es möglich, Lagergut (zum Beispiel Artikel, die dem Lager angehören) in dem Lagerbereich zu definieren. Die definierten Lagergüter können aktiv durch eine Lagergüteridentifikationseinrichtung gekennzeichnet werden. Beispielsweise können die Lagergüter mit einem Barcode, einem alphanumerischen Code (zum Beispiel einer Artikelnummer), einem QR-Code, einem RFID-Tag, etc., versehen werden. Es ist aber auch möglich, einzelne Lagergüter automatisch zu erkennen, zum Beispiel durch eine Bilderkennungssoftware, die Artikel erkennt (beispielsweise durch Verfahren der Mustererkennung).

Es kann dann der Lagerort des Lagerguts in dem zugeordneten Lagerbereich definiert werden. Dies kann zum Beispiel dadurch erfolgen, dass einem Lagergut (zum Beispiel einem Artikel) ein Lagerort (beispielsweise in Form einer Koordinate) zugeordnet wird. Insbesondere kann eine Koordinatenerfassung der Lagergüter mittels eines Lagergutkoordinatenscanners erfolgen.

Mit Vorteil kann eine Zuordnung des jeweiligen Lagerguts bzw. Artikels zu Koordinaten in dem Lagerbereich durchgeführt werden.

Der Lagergutkoordinatenscanner kann zum Beispiel eine Kamera aufweisen oder daraus bestehen. Zum Beispiel kann eine fotografische Erfassung des Lagerbereichs mit dem Lagergut mit Hilfe einer optischen Kamera durchgeführt werden. Gemäß einem exemplarischen Ausführungsbeispiel kann ein Benutzer eine Kamera eines Smartphones oder eines anderen portablen Geräts an dem Lagerbereich (zum Beispiel einem Regal) vorbei führen. Eine solche Kamera kann aber auch auf einem Roboterarm geführt und gestartet werden.

Eine Software kann eine Lagergüteridentifikationseinrichtung erkennen (zum Beispiel kann ein Barcode eines Artikels gelesen werden). Eine Software kann entsprechende zweidimensionale Koordinaten in dreidimensionale Koordinaten im Raum umrechnen. Dadurch ist der genaue Lagerort der Lagergüter im Lagerbereich bekannt.

Der Lagergutkoordinatenscanner kann zum Beispiel ein RFID-Scanner sein, dessen Bewegung im Raum ebenfalls erfasst werden kann. Ein solcher RFID-Scanner kann in entsprechender Weise wie ein als Kamera ausgebildeter Lagergutkoordinatenscanner zur Identifikation der Lagergüter am Lagerbereich (zum Beispiel der Artikel am Regal) vorbeigeführt werden. Als Ergebnis kann eine Zuordnung zwischen Koordinate und Lagergut erhalten werden. Dadurch ist der Lagerbereich (zum Beispiel das Regal) definiert. Dadurch ist ferner bekannt, welches Lagergut (insbesondere welcher Artikel) an welcher Stelle im Lagerbereich angeordnet ist.

Zum Beispiel kann das Lagergut Werkzeuge (beispielsweise Bohrmaschinen, Tellerschleifer, Schraubendreher), Aerosoldosen (beispielsweise Lackierdosen) aufweisen. Ein Lagergut kann auch einen Gutschein über eine Ware und/oder eine Dienstleistung enthalten. Ebenso kann ein Dashbutton mit einer Artikelnummer oder einer Einkaufsliste von Artikeln ein Lagergut sein.

Ein Lagerbereich kann zum Beispiel ein Regal, ein Regalboden im Regal, mindestens ein Regalboden eines Regals, ein Werkstattwagen, eine Arbeitsfläche auf dem Werkstattwagen, mindestens eine Schublade in einem Regal oder Werkstattwagen, ein Koffer, mindestens ein Kofferfach in einem Koffer, ein Hängeplatz an der Wand für Blätter einer Kreissäge, große Werkzeuge, etc. sein. Auch kann ein Lagerbereich eine Lagerbox oder deren Inhalt sein.

Auf einer Anzeigeeinrichtung kann ein Ergebnis einer Lagerverwaltung dargestellt werden. Zum Beispiel kann die Anzeigeeinrichtung ein Monitor eines PCs, eine Anzeigeeinrichtung eines Mobilfunkgeräts, eines Tablets, eines Laptops oder ein Display in und/oder an einer Brille sein.

Die Identifikation des Lagerbereichs durch eine Lagerbereichsidentifkationseinrichtung kann zum Beispiel ein QR-Code oder Strichcode oder ein sonstiger Marker (zum Beispiel an den vier Eckpunkten eines rechteckförmigen Lagerbereichs) sein. Auch kann hierfür eine farbige Umrandung des Lagerbereichs eingesetzt werden. Allgemeiner ausgedrückt kann als Lagerbereichsidentifikationseinrichtung eine beliebige Form zum Einsatz kommen, die als ein Eckpunkt eines Randes des Lagerbereichs definiert sein kann (zum Beispiel rote Quadrate). Mehrere Formen können als Polygon den Rand des Lagerbereichs definieren.

Eine fotografische Erfassung eines Lagerbereichs und/oder von Lagergütern kann zum Beispiel mittels einer optischen Kamera erfolgen, die ein Foto und/oder ein Video des Lagerbereichs erstellt. Optional kann zusätzlich ein Sender und/oder Empfänger weiterer Frequenzen vorgesehen werden. Mittels eines Infrarotsensors können Bewegungen eines Menschen im Lager erfasst und von Gegenständen unterschieden werden.

Zum Beispiel kann ein Lasersender und/oder ein Laserempfänger implementiert werden, beispielsweise um Barcodes auf Lagergut zu lesen. Möglich ist jedoch auch eine Erfassung mittels eines RFID-Sensors, der Lagergut identifiziert.

Gemäß exemplarischen Ausführungsbeispiel der Erfindung kann unter Verwendung eines beschriebenen Lagerverwaltungssystems auch eine Nachbestellung von Lagergütern vereinfacht werden:
Gemäß einem diesbezüglichen Ausführungsbeispiel kann zunächst ein Lagerort bzw. Lagerbereich einerseits oder ein Lagergut andererseits ausgewählt werden, für den bzw. das nachzubestellen ist. Diese Auswahl kann zum Beispiel auch durch einen Benutzer über ein Foto oder ein Video eines Lagerbereichs und/oder eines Lagerguts getroffen werden. Ein Benutzer kann einen bestimmten Lagerbereich (zum Beispiel ein Regal) durch eine mittels automatischer Bilderkennung erkennbare Geste auswählen, zum Beispiel durch Zeigen mit dem Finger auf einen Lagerbereich bzw. ein Lagergut (zum Beispiel durch Zeigen auf ein Regal bzw. auf einen Artikel in dem Regal). Auf Basis eines so erfassten Bestellwunsches kann dann, zum Beispiel unter Verwendung einer bestimmten Software (zum Beispiel einer auf einem Mobilfunkgerät laufenden App) Bestellinformation generiert werden. Diese Bestellinformation kann an einen Händler oder Bestellverantwortlichen übermittelt werden. Dies kann zum Beispiel über ein Kommunikationsnetzwerk erfolgen, beispielsweise über Internet, per Email, per SMS, etc.

Zum Beispiel kann eine Auswahl eines nachzubestellenden Lagerguts durch einen Vergleich mit einer Liste von zuletzt bestellten Lagergütern, durch einen Vergleich mit einer vordefinierten Einkaufsliste, durch eine Identifikation von leeren Lagerbereichen oder Lagerorten und dann einem Markieren des leeren Lagerorts oder Lagerbereichs in optischer Darstellung mittels einer Computermaus oder einem Finger eines Benutzers erfolgen. Dadurch kann eine Bestellung ausgelöst werden.

Es ist auch möglich, bei Erkennung eines Bestellbedarfs eine Mit-Bestellung der jeweiligen Lagergüter bei einer nächsten Bestellung von Lagergütern durchzuführen (zum Beispiel wenn ein Lagerplatz bzw. Lagerbereich leer ist und Ware bzw. Lagergüter fehlen).

Die genannte Bestellinformation kann die Firma, in welcher der Lagerbereich angeordnet ist, sowie Artikelnummer und Anzahl von Lagergütern umfassen.

Gemäß einem anderen Ausführungsbeispiel der Erfindung kann zum Nachbestellen mittels einer Überwachungskamera registriert werden, dass keine Lagergüter mehr da sind. Dann kann eine automatische Nachbestellung ausgelöst werden.

Mit Vorteil ist es möglich, einen räumlichen Erfassbereich für die Überwachungskamera durch eine Lagerbereichsidentifkationseinrichtung zu begrenzen. Dies ist vorteilhaft, damit die Software für eine Überwachungskamera nur einen erwünschten Lagerbereich überwacht. Zum Beispiel kann es wünschenswert sein, dass aus Gründen des Datenschutzes keine Überwachung des gesamten Lagers erfolgen soll.

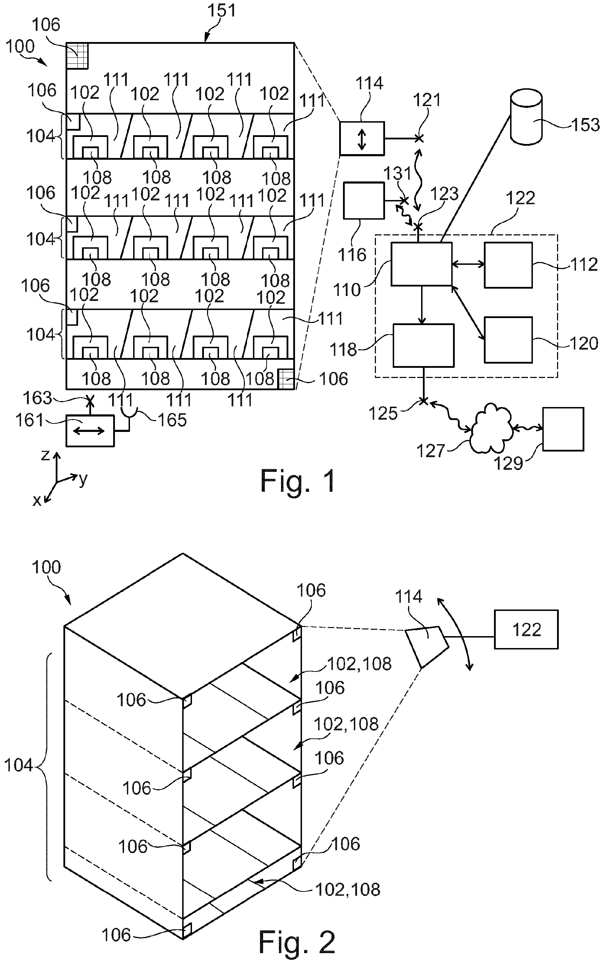

**Figur 1** zeigt ein Lagerverwaltungssystem 100 gemäß einem exemplarischen Ausführungsbeispiel der Erfindung.

Das in Figur 1 dargestellte Lagerverwaltungssystem 100 weist eine Vielzahl von mit Lagergütern 102 bestückbare Lagerbereiche 104 auf. Im dargestellten Ausführungsbeispiel sind die Lagerbereiche 104 Regalböden eines Lagerregals 151. Ferner ist eine Mehrzahl von Lagerbereichsidentifikationseinrichtungen 106 vorgesehen, von denen jede an einem zugeordneten der Lagerbereiche 104 positioniert ist. Die Lagerbereichsidentifikationseinrichtungen 106 sind in dem dargestellten Ausführungsbeispiel als QR-Codes ausgebildet.

Eine Vielzahl von Lagergütern 102, zum Beispiel Werkzeuge, sind an den Lagerbereichen 104 angeordnet. Jedes der Lagergüter 102 ist mit einer zugeordneten Lagergüteridentifikationseinrichtung 108 versehen. Genauer gesagt ist auf jedes der Lagergüter 102 eine Lagergüteridentifikationseinrichtung 108 aufgeklebt und daher an einem zugeordneten der Lagergüter 102 positioniert.

Figur 1 zeigt auch eine in einem Prozessor 122 ausgebildete Ermittlungseinrichtung 110, die zum Ermitteln eines Datensatzes ausgebildet ist, der in einer Datenbank 153 gespeichert werden kann. Die Datenbank 153 ist zum Beispiel ein elektronischer Massenspeicher, wie zum Beispiel eine Festplatte. Der Datensatz in der Datenbank zeigt für jedes der Lagergüter 102 und für jeden der mit einem jeweiligen Lagergut 102 korrelierten Lagerbereiche 104 an, welches Lagergut 102 an welchem Lagerbereich 104 an welcher Position positioniert ist. Bevorzugt ist die Ermittlungseinrichtung 110 zum Ermitteln des Datensatzes sogar derart ausgebildet, dass der Datensatz für jedes der Lagergüter 102 indikativ dafür ist, in welchem Teilbereich 111 eines jeweiligen Lagerbereichs 104 das jeweilige Lagergut 102 positioniert ist. Jeder Teilbereich 111 kann in dem Ausführungsbeispiel gemäß Figur 1 einem Kompartment in einem zugehörigen Lagerbereich 104 (d.h. auf einem zugehörigen Regalboden) entsprechen. Anhand des Beispiels von Figur 1 kann in der Datenbank für jedes der Lagergüter 102 somit nicht nur abgefragt werden, in welchem Regalboden und somit in welchem Lagerbereich 104 das jeweilige Lagergut 102 angeordnet ist, sondern auch an welchem Platz innerhalb des zugeordneten Lagerbereichs 104, d.h. in welchem Teilbereich 111, das jeweilige Lagergut 102 positioniert ist. Gemäß Figur 1 ist jeder der Regalböden in vier Kompartments aufgeteilt, wobei jedes Kompartment ein zugehöriges Lagergut 102 aufnimmt. Für ein bestimmtes Lagergut 102 ist somit aus der Datenbank nicht nur der zugehörige Regalboden, sondern auch das zugehörige Kompartment - als Beispiel für einen Teilbereich 111 - des Regalbodens ermittelbar.

Die Ermittlung des Datensatzes durch die Ermittlungseinrichtung 110 kann mit Vorteil mittels Erkennens der Lagerbereichsidentifikationseinrichtungen 106 und der Lagergüteridentifikationseinrichtungen 108 und mittels Erkennens von Positionen der Lagerbereichsidentifikationseinrichtungen 106 und der Lagergüteridentifikationseinrichtungen 108 erfolgen. Damit ist eine einfache und fehlerrobuste Erkennung der Lagergüter 102 in Bezug auf deren zugeordneten Lagerbereich 104 ermöglicht.

Das Lagerverwaltungssystem 100 gemäß Figur 1 weist ferner eine Abfrageeinrichtung 112 als Teil des Prozessors 122 auf, die eingerichtet ist, für jedes der Lagergüter 102 mittels einer Abfrage bei der Ermittlungseinrichtung 110 mindestens einen zugehörigen Lagerbereich 104 abzufragen, an dem ein jeweiliges Lagergut 102 positioniert ist. Die Abfrageeinrichtung 112 kann auch für jeden der Lagerbereiche 104 mittels einer Abfrage bei der Ermittlungseinrichtung 110 ein oder mehrere zugehörige Lagergüter 102 abfragen, das oder die an dem jeweiligen Lagerbereich 104 positioniert ist oder sind.

Eine Erfasseinrichtung 114 des Lagerverwaltungssystems 100 ist zum messtechnischen Erfassen der Lagerbereiche 104 und der Lagergüter 102 ausgebildet. Genauer gesagt kann die Erfasseinrichtung 114 Erfassdaten als Basis für das Ermitteln des Datensatzes erfassen bzw. aufnehmen. Hierzu kann die Erfasseinrichtung 114 Bilddaten der Lagerbereiche 104 bzw. der Lagergüter 102 in den Lagerbereichen 104 aufnehmen. Zu diesem Zweck enthält die Erfasseinrichtung 114 gemäß dem Ausführungsbeispiel von Figur 1 eine oder mehrere entlang der Lagerbereiche 104 verfahrbare und schwenkbare Kameras zum Erfassen von Bilddaten. Alternativ oder ergänzend ist es auch möglich, dass die Erfasseinrichtung 114 ein oder mehrere entlang der Lagerbereiche 104 verfahrbare Transponderlesegeräte zum Erfassen von Transponderdaten aufweist.

Die Ermittlungseinrichtung 110 ist ausgebildet, zum Beispiel mittels Bilderkennung und/oder anderen bildverarbeitenden Verfahren basierend auf mittels der Kamera(s) erfassten Bilddaten die Lagerbereiche 104 und die Lagergüter 102 zu ermitteln. Hierfür kann die Ermittlungseinrichtung 110, Informationen der Lagerbereichsidentifikationseinrichtungen 106 und der Lagergüteridentifikationseinrichtungen 108 auswerten, die mittels der Erfasseinrichtung 114 erfasst wurden. Zum Beispiel können die Lagerbereichsidentifikationseinrichtungen 106 eine räumliche Begrenzung eines zugeordneten der Lagerbereiche 104 definieren oder angeben.

Darüber hinaus ist die Ermittlungseinrichtung 110 eingerichtet, als Teil des Datensatzes für die Lagergüter 102 und für die Lagerbereiche 104 dreidimensionale Raumkoordinaten zu ermitteln. Dies kann zum Beispiel rechnerisch anhand der Daten durchgeführt werden, die mittels der Erfasseinrichtung 114 erfasst werden. Insbesondere kann die Ermittlungseinrichtung 110 hierfür mittels der Erfasseinrichtung 114 erfasste zweidimensionale Raumkoordinaten der Lagergüter 102 und der Lagerbereiche 104 in dreidimensionale Raumkoordinaten der Lagergüter 102 und der Lagerbereiche 104 umrechnen. Dies kann zum Beispiel unter Verwendung von Methoden der Triangulation erfolgen. Es ist auch möglich, für diese Umrechnung Zusatzinformation zu verwenden, die von den Lagerbereichsidentifikationseinrichtungen 106 und den Lagergüteridentifikationseinrichtungen 106 ausgelesen wurden. Auf diese Weise ist die Ermittlungseinrichtung 110 in der Lage, Raumkoordinaten der Lagergüter 102 Raumkoordinaten eines jeweils zugehörigen Lagerbereichs 104 zuzuordnen.

Mit Vorteil kann die Erfasseinrichtung 114 ausgebildet sein, Erfassdaten ausschließlich in einem Raumbereich erfassen zu können, der durch die Lagerbereiche 104 und Lagergüter 102 begrenzt wird. Dies kann hardwaretechnisch erreicht werden, indem ein Blickwinkel der Kamera(s) der Erfasseinrichtung 114 andere Raumbereiche nicht erfassen kann. Alternativ oder ergänzend kann dies auch softwaretechnisch erreicht werden, indem die Steuersoftware für die Erfasseinrichtung 114 eine Erfassung unerwünschter Raumbereiche nicht zulässt.

Figur 1 zeigt auch, dass das Lagerverwaltungssystem 100 ein Benutzerendgerät bzw. eine Benutzerschnittstelle 116 zum Anzeigen des Datensatzes aufweist. Beispielsweise kann das Benutzerendgerät bzw. die Benutzerschnittstelle 116 ein Smartphone sein. Die Benutzerschnittstelle 116 kann Eingabeelemente (zum Beispiel ein Touchscreen) und/oder Ausgabeelemente (zum Beispiel eine elektronische Anzeigeeinrichtung) aufweisen und kann zum insbesondere bidirektionalen Kommunizieren mit der Ermittlungseinrichtung 110 des Lagerverwaltungssystems 100 ausgebildet sein. Es ist in einem Ausführungsbeispiel der Erfindung auch möglich, dass die Benutzerschnittstelle 116 zum Anzeigen des Datensatzes oder von Teilen davon mittels Augmented Reality ausgebildet ist. Dies kann vorteilhaft mit einer portablen oder tragbaren ("wearable") Benutzerschnittstelle 116 erreicht werden, zum Beispiel einer Benutzerschnittstelle 116 mit Augmented Reality-Brille.

Überdies weist das Lagerverwaltungssystem 100 eine Nachbestelleinrichtung 118 auch, die ausgebildet ist, eine Nachbestellung bestimmter Lagergüter 102 auszulösen, wenn ein vorbestimmtes lagergutbezogenes Nachbestellereignis erfasst wird. Das Vorliegen eines Nachbestellereignisses kann zum Beispiel mittels der Erfasseinrichtung 114 erfasst werden. Zum Beispiel kann das Vorliegen eines Nachbestellereignisses in Form einer Benutzeraktivität durch eine mittels der Erfasseinrichtung 114 erfasste vorbestimmte Benutzergeste erkannt werden. Zum Beispiel kann hierfür erfasst werden, wie ein Benutzer mit seinem Finger auf ein nachzubestellendes Lagergut 102 und/oder einen einem nachzubestellenden Lagergut 102 zugehörigen Lagerbereich 104 zeigt. Auch eine andere, vorzugsweise vorbestimmte, Benutzergeste kann ein Nachbestellen eines Lagergut 102, auf das sich die Benutzergeste bezieht, auslösen.

Gemäß anderen Ausführungsbeispielen können andere Nachbestellereignisse die Nachbestellung eines oder mehrerer Lagergüter 102 auslösen. Zum Beispiel kann das vorbestimmte Nachbestellereignis ein sensorisch erfasstes Absinken einer Anzahl verbleibender Lagergüter 102 an einem zugeordneten Lagerbereich 104 unter einen vorbestimmten Schwellwert sein. Das eine Nachbestellung auslösende Erfassen eines Nachbestellereignisses kann auch eine für das Entnehmen einer Anzahl von Lagergütern 102 aus einem zugeordneten Lagerbereich 104 indikative Information sein. Auch kann ein benutzerseitiges Nachbestellkommando als Trigger zum Auslösen einer Nachbestellung verwendet werden. Gemäß einem anderen Ausführungsbeispiel kann eine einen Entnahmebedarf anzeigende Information zum Auslösen der Nachbestellung verwendet werden.

Gemäß einem bevorzugten Ausführungsbeispiel umfasst das Lagerverwaltungssystem 100 auch eine Benutzerorteinrichtung 120. Die Benutzerorteinrichtung 120 kann zum Orten menschlicher Benutzer im Bereich des Lagerverwaltungssystems 100 ausgebildet sein. Dies kann zum Beispiel mittels einer Infrarotkamera erfolgen, die aufgrund von sensorisch erfasster Temperaturinformation und/oder Temperaturverteilungsinformation Menschen von Objekten im Lagerverwaltungssystem 100 unterscheiden kann. Alternativ oder ergänzend können Menschen im Lagerverwaltungssystem 100 auch mittels Methoden automatischer Bilderkennung erkannt werden, und ihre Position im Lagerverwaltungssystem 100 kann auf diese Weise ermittelt werden. Die Benutzerorteinrichtung 120 kann ferner zum Steuern des Lagerverwaltungssystems 100 derart ausgebildet sein, dass bewegbare Komponenten des Lagerverwaltungssystems 100 nur unter Wahrung eines Sicherheitsabstands zu einem georteten Benutzer positioniert werden. Zum Beispiel kann ein Roboter, der die Kamera(s) der Erfasseinrichtung 114 verfährt, eine Trajektorie derart anpassen, dass eine Kollision zwischen einem Menschen und dem Roboter ausgeschlossen ist. Dadurch kann die Betriebssicherheit des Lagerverwaltungssystems 100 verbessert werden.

In Figur 1 ist ferner eine zum Beispiel als beweglicher Roboter ausgebildete Handhabungseinrichtung 161 zum Handhaben von Lagergütern 102 dargestellt. Über eine Kommunikationsschnittstelle 163 kann die Handhabungseinrichtung 161 zum Beispiel mit dem Prozessor 122 kommunizieren, zum Beispiel um Steuerbefehle entgegenzunehmen. Auf diese Weise kann zum Beispiel der Prozessor 122 die Handhabungseinrichtung 161 so ansteuern, dass die Handhabungseinrichtung 161 zu einem über ihre Position definierten Lagerbereich 104 fährt. Die Handhabungseinrichtung 161 kann dann zum Beispiel über einen Greifarm 165 ein Lagergut 102 von dem zugeordneten Lagerbereich 104 entnehmen und an ein vorbestimmtes Ziel verbringen. Es ist auch möglich, dass die Handhabungseinrichtung 161, beispielsweise mittels des Greifarms 165, Lagergüter 102 zu einem bestimmten Lagerbereich 104 verbringt, zum Beispiel im Zusammenhang mit einer Nachbestellung.

In Figur 1 ist also ein Lagerverwaltungssystem 100 dargestellt, in dem die Lagerbereiche 104 Regalböden eines Regals sind und die Lagergüter 102 mit Transpondern versehene Güter, wie zum Beispiel Werkzeuge, sind. Je Lagerbereich 104 sind mehrere Lagergüter 102 an bestimmten Positionen angebracht. Die Lagerbereichsidentifikationseinrichtungen 106 sind im dargestellten Ausführungsbeispiel als QR-Codes in Ecken des Regals angebracht. Im dargestellten Ausführungsbeispiel sind die Lagergüteridentifikationseinrichtungen 108 Barcodes der jeweiligen Artikel im jeweiligen Fach, die ein jeweiliges Lagergut 102 in einem jeweiligen Lagerbereich 104 bilden. Die mit einer bewegbaren und schwenkbaren Kamera ausgebildete Erfasseinrichtung 114 nimmt die Bilder des Regals auf und identifiziert die Lagerbereiche 104 anhand der Lagerbereichsidentifikationseinrichtungen 106 und die Lagergüter 102 anhand der Lagergüteridentifikationseinrichtungen 108. Ferner werden die Positionen der Lagerbereiche 104 und der Lagergüter 102, zum Beispiel anhand der Kamerabilder und optional unter Verwendung von GPS-Information oder dergleichen, identifiziert.

Über eine in diesem Ausführungsbeispiel drahtlose Kommunikationsschnittstelle 121 kommuniziert die Erfasseinrichtung 114 mit einer in diesem Ausführungsbeispiel drahtlosen Kommunikationsschnittstelle 123 des Prozessors 122. Der Prozessor 122 enthält die Ermittlungseinrichtung 110, die Abfrageeinrichtung 112, die Nachbestelleinrichtung 118 und die Benutzerorteinrichtung 120.

Über eine weitere Kommunikationsschnittstelle 125 kann die Nachbestelleinrichtung 118 des Prozessors 122 über ein Kommunikationsnetzwerk 127, zum Beispiel das Internet, mit einer Nachlieferungsentität 129 kommunizieren. Die Nachlieferungsentität 129 kann ein Computer eines Zulieferers sein, der auf ein entsprechendes Nachbestellkommando der Nachbestelleinrichtung 118 über die Kommunikationsschnittstelle 125 eine Nachbestellung von Lagergütern 102 ausführt und diese zu dem Lagerverwaltungssystem 100 verbringt.

Im Betrieb des Lagerverwaltungssystems 100 nimmt die Erfasseinrichtung 114 Bilddaten der Lagergüter 102 und der Lagerbereiche 106 auf und kann sich dabei bewegen. Auf diese Weise können mehrere zweidimensionale Projektionen der Lagergüter 102 und/oder der Lagerbereiche 104 aufgenommen werden. Die entsprechenden Bilddaten können von der Erfasseinrichtung 114 optional vorverarbeitet werden und über die Kommunikationsschnittstellen 121, 123 der Ermittlungseinrichtung 110 zugeführt werden. Die Ermittlungseinrichtung 110 kann basierend auf den erfassten Lagerbereichsidentifikationseinrichtungen 106 und Lagergüteridentifikationseinrichtungen 108 für jedes der Lagergüter 102 und für jeden der Lagerbereiche 104 dreidimensionale kartesische Koordinaten ermitteln und die Korrelation der Lagerbereiche 104 mit den darin enthaltenen Lagergütern 102 sowie deren Positionsinformationen abspeichern.

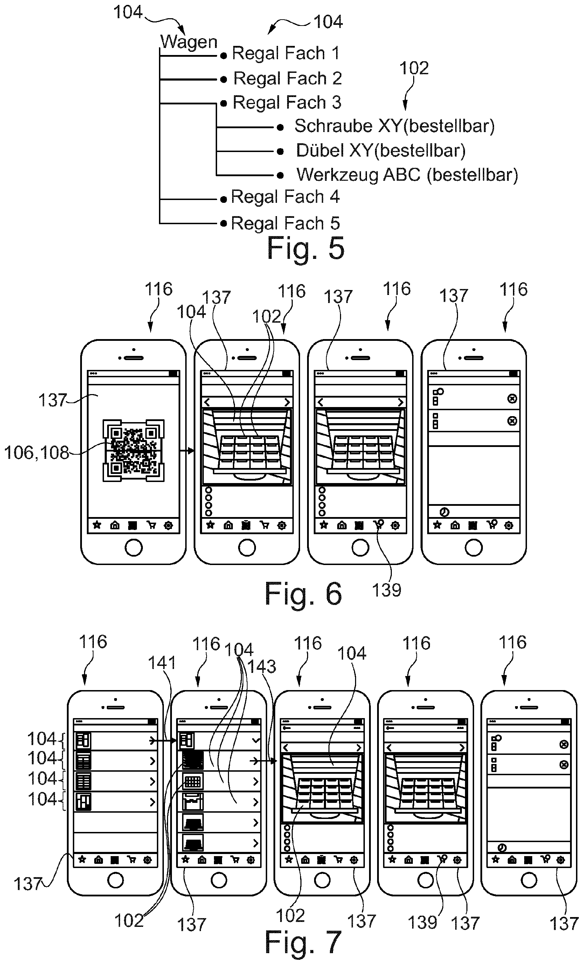

Die Abfrageeinrichtung 112 kann auf diese Daten zugreifen. Eine Nachbestellung kann durch die Nachbestelleinrichtung 118 ausgelöst werden, wenn Ermittlungsergebnisse der Ermittlungseinrichtung 110 zeigen, dass es in einzelnen Lagerbereichen 104 Bedarf für die Nachlieferung zugeordneter Lagergüter 102 gibt. Alternativ oder ergänzend kann, wie unten Bezug nehmend auf Figur 6 bis Figur 11 näher beschrieben wird, eine Nachbestellung auch durch einen entsprechenden Betrieb der portablen Benutzerschnittstelle 116 (zum Beispiel ein Mobiltelefon oder eine Augmented-Reality-Brille) erfolgen. Hierfür ist die portable Benutzerschnittstelle 116 mit einer Kommunikationsschnittstelle 131 ausgestattet, die im dargestellten Ausführungsbeispiel drahtlos mit der Kommunikationsschnittstelle 123 des Prozessors 122 und folglich mit der Ermittlungseinrichtung 110 kommunizieren kann.

Mit dem Lagerverwaltungssystem 100 gemäß Figur 1 ist eine schnelle, fehlerrobuste und einfache Verwaltung auch hochkomplexer Lager mit vielen unterschiedlichen Lagergütern 102 und vielen unterschiedlichen Lagerbereichen 104 möglich. Das Lagerverwaltungssystem 100 ist beliebig skalierbar und kann Veränderungen im Warenbestand dynamisch erfassen und nachverfolgen. Über die portable Benutzerschnittstelle 116 kann eine Benutzeraktivität optional in das Lagerverwaltungssystem 100 eingegeben werden. Ferner kann das Lagerverwaltungssystem 100 angesichts des beschriebenen Betriebs besonders fehlerrobust operieren.

Die als Handhabungseinrichtung 161 dargestellte Robotereinrichtung kann zum Beispiel bei Anforderung aus der Produktion einzelner Lagergüter 102 aus zugeordneten Lagerbereichen 104 anhand der zuvor ermittelten dreidimensionalen Koordinaten sicher entnehmen und zu einem Ziel verbringen. Auch ein Nachbefüllen von entleerten Lagerbereichen 102 kann durch eine solche Robotereinrichtung fehlerfrei und betriebssicher erfolgen.

Die Benutzerorteinrichtung 120 kann vermeiden, dass es zu gefährlichen Zusammenstößen zwischen einem Benutzer und beweglichen Komponenten des Lagerverwaltungssystems 100 (siehe Kamera der Erfasseinrichtung 114 und die Handhabungseinrichtung 161) kommt. Im Falle einer drohenden Kollision werden die beweglichen Komponenten so angesteuert, dass diese mit einem Benutzer nicht zusammenstoßen. Es ist auch möglich, in diesem Fall einen Alarm auszugeben.

**Figur 2** zeigt eine räumliche Ansicht von Lagerbereichen 104 in Form eines Regals eines Lagerverwaltungssystems 100 gemäß einem exemplarischen Ausführungsbeispiel der Erfindung.

Figur 2 zeigt also eine dreidimensionale Darstellung der Lagerbereiche 104 und der beweglichen Erfasseinrichtung 114. Die in dem Prozessor 122 enthaltene Ermittlungseinrichtung 110 kann für jeden der Lagerbereiche 104 bzw. jedes der Lagergüter 102 dreidimensionale Raumkoordinaten in einem kartesischen Koordinatensystem (x, y, z) erfassen und in einem Datensatz speichern. Die Erfasseinrichtung 114 dient, zum Erfassen und zur Überwachung des Lagergüterbestands.

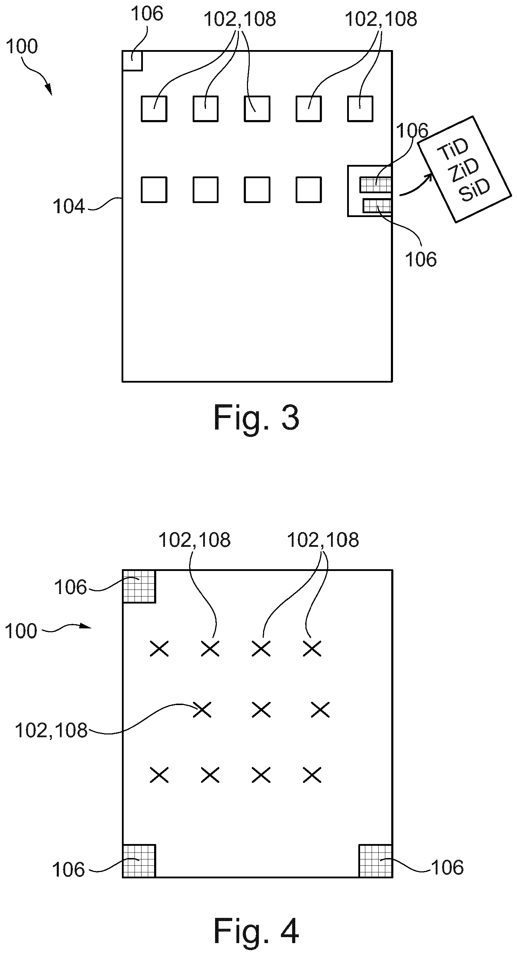

**Figur 3** und **Figur 4** zeigen Teile eines Lagerverwaltungssystems 100 gemäß einem exemplarischen Ausführungsbeispiel der Erfindung.

Mit dem Lagerverwaltungssystem 100 gemäß Figur 3 und Figur 4 kann zunächst durch QR-Codes eine Definition der Raumbereiche des Regals erfolgen, welche Raumbereiche die Lagerbereiche 104 bilden. Den einzelnen Objekten, das heißt den Lagergütern 102 und den Lagerbereichen 104, können zunächst zweidimensionale kartesische Koordinaten zugeordnet werden. Ein Benutzer kann die Benutzerschnittstelle 116, zum Beispiel ein Mobilfunkgerät mit Kamerafunktion, am Lagerverwaltungssystem 100 vorbeifahren. Eine Software kann die Barcodes bzw. QR-Codes an den Lagergütern 102 bzw. Lagerbereichen erfassen und diesen zweidimensionale Koordinaten zuordnen. Durch entsprechende Datenverarbeitung der erfassten Bilddaten kann dann ein Satz dreidimensionaler Raumkoordinaten für die Lagergüter 102 und die zugeordneten Lagerbereiche 104 ermittelt und in einer Datenbank abgelegt werden.

**Figur 5** zeigt eine logische Hierarchie von Lagerbereichen 104 und zugeordneten Lagergütern 102 gemäß einem exemplarischen Ausführungsbeispiel der Erfindung. Figur 5 zeigt exemplarisch eine hierarchische Datenstruktur, welche den Lagerbereichen 104 unterschiedlicher Hierarchieebenen (Wagen bzw. Regalfach) einzelne Lagergüter 102 (Schraube, Dübel, Werkzeug) zuordnet.

**Figur 6** zeigt ein Benutzerendgerät bzw. eine portable Benutzerschnittstelle 116 gemäß einem exemplarischen Ausführungsbeispiel der Erfindung in verschiedenen Betriebszuständen während Durchführung einer Nachbestellung.

Figur 6 zeigt eine Anzeigeeinrichtung 137 mit Eingabefunktion (Touchscreen) einer als Mobilfunkgerät ausgebildeten portablen Benutzerschnittstelle 116 in unterschiedlichen Betriebszuständen während Durchführung einer Nachbestellung.

Zunächst kann mit einer Scanfunktion der portablen Benutzerschnittstelle 116 ein QR-Code als Beispiel für eine Lagerbereichsidentifikationseinrichtung 106 oder eine Lagergüteridentifikationseinrichtung 108 erfasst werden (siehe linke Darstellung). Durch die darin enthaltenen Informationen kann dann einem Benutzer ein zugeordneter Lagerbereich 104 mit Lagergütern 102 angezeigt werden (siehe zweite Darstellung von links). Durch Betätigen eines Anzeigefelds 139 auf der Anzeigeeinrichtung 137 kann ein Benutzer die angezeigten Lagergüter 102 dann zur Bestellung oder Nachbestellung auswählen (siehe zweite Darstellung von rechts). Nachfolgend kann eine entsprechende Nachbestellung ausgelöst werden (siehe Feld "Order" in der rechten Darstellung).

**Figur 7** zeigt eine portable Benutzerschnittstelle 116 gemäß einem anderen exemplarischen Ausführungsbeispiel der Erfindung in verschiedenen Betriebszuständen während Durchführung einer Nachbestellung.

Figur 7 zeigt die Benutzerschnittstelle 116 während Ausführung eines anderen Verfahrens zum Nachbestellen. Hierbei kann zunächst aus einer übergeordneten hierarchischen Darstellung von Lagerbereichen 104 eines Lagers (Abbildung ganz links) durch einen Benutzer eine Auswahl getroffen werden, wie schematisch mit einem Pfeil 141 dargestellt. Der Benutzer gelangt dann in eine niedrigere Hierarchie von Lagerbereichen 104, in der auch Lagergüter 102 dargestellt sind (zweite Darstellung von links in Figur 7). Wie mit einem Pfeil 143 schematisch dargestellt ist, kann ein Benutzer dann eine Auswahl eines Lagerbereichs 104 mit zugeordneten Lagergütern 102 treffen (mittlere Darstellung in Figur 7). Der Nachbestellvorgang kann dann abgeschlossen werden, wie in den beiden rechten Darstellungen von Figur 7 gezeigt, die den beiden rechten Darstellungen von Figur 6 entsprechen.

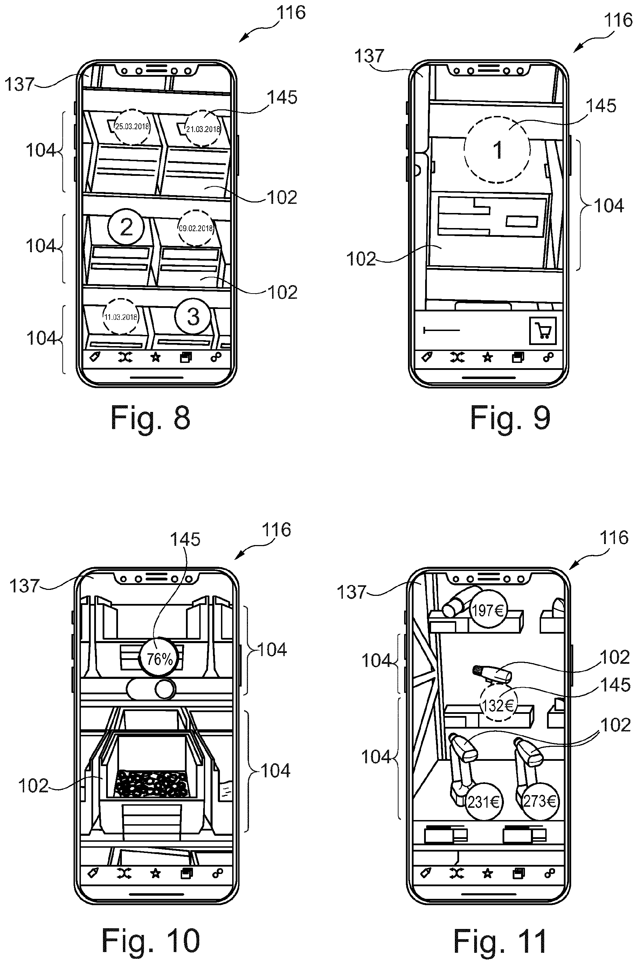

Figur 8 bis Figur 11 zeigt ein Benutzerendgerät bzw. eine portable Benutzerschnittstelle 116 des Lagerverwaltungssystems 100 gemäß einem exemplarischen Ausführungsbeispiel der Erfindung in unterschiedlichen Betriebszuständen während Durchführens einer Augmented Reality Applikation. Genauer gesagt zeigen Figur 8 bis Figur 11 eine als Smartphone ausgebildete portable Benutzerschnittstelle 116, in denen Lagergüter 102 und zugeordnete Lagerbereiche 104 dargestellt sind. Überblendet werden Augmented-Reality-Informationen 145, die nach Zuordnung der Lagergüter 102 zu den zugeordneten Lagerbereichen 104 durch einen Datenbankabgleich mittels der Ermittlungseinrichtung 110 aufgefunden werden können und an der Anzeigeeinrichtung 137 der portablen Benutzerschnittstelle 116 dem Benutzer so dargestellt werden können, dass die Informationen dem zugehörigen Lagergut 102 oder Lagerbereich 104 überlagert werden.

Bezugnehmend auf **Figur 8** ist das dort dargestellte Augmented-Reality-Feld 145 indikativ dafür, dass die letzte Bestellung älter als drei Tage ist (maximale Lieferzeit), dass das Datum der letzten Bestellung angegeben wird, bzw. welche Menge zuletzt bestellt wurde.

In **Figur 9** ist als Augmented-Reality-Feld 145 die Information erkennbar, welche Menge von Lagergütern 102 zu einem bestimmten Zeitpunkt in dem zugehörigen Lagerbereich 104 enthalten sind.

In **Figur 10** zeigt das dortige Augmented-Reality-Feld 145 einen Akkulevel eines Dashbuttons, der zur Nachbestellung von Lagergütern 102 gedrückt werden kann, die einem Lagerbereich 104 zugeordnet sind.

In **Figur 11** wird als Augmented-Reality-Feld 145 ein benutzerbezogener Preis für die Nachbestellung eines Lagerguts 102 angezeigt. Hierfür kann in einer Datenbank nachgeschlagen werden, welche Preise ein der portablen Benutzerschnittstelle 116 zugeordneter Benutzer für die Lieferung bestimmter Lagergüter 102 erhält.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Lagerverwaltungssystem (100), aufweisend:
eine Mehrzahl von mit Lagergütern (102) zu bestückende Lagerbereiche (104);
eine Mehrzahl von Lagergütern (102), die an den Lagerbereichen (104) angeordnet sind;
eine Mehrzahl von Lagerbereichsidentifikationseinrichtungen (106), von denen jede an einem zugeordneten der Lagerbereiche (104) positioniert ist, wobei zumindest ein Teil der Lagerbereichsidentifikationseinrichtungen (106) an einer räumlichen Begrenzung eines zugeordneten der Lagerbereiche (104) angeordnet ist, wobei die Lagerbereichsidentifikationseinrichtungen (106) aus einer Gruppe ausgewählt sind, die besteht aus einem Transponder, insbesondere einem RFID-Tag, einem optisch auslesbaren Code, insbesondere einem Barcode, einem QR-Code oder einem alphanumerischen Code, einer vorbestimmten geometrischen Figur, insbesondere einer vorbestimmt eingefärbten geometrischen Figur, und einer Anordnung mehrerer vorbestimmter geometrischer Figuren, insbesondere zur Definition äußerer Begrenzungen eines zugeordneten Lagerbereichs (104);
eine Mehrzahl von Lagergüteridentifikationseinrichtungen (108), von denen jede an einem zugeordneten der Lagergüter (102) positioniert ist;
eine in einem Prozessor (122) ausgebildete Ermittlungseinrichtung (110), die mittels Erkennens der Lagerbereichsidentifikationseinrichtungen (106) und der Lagergüteridentifikationseinrichtungen (108) und mittels Erkennens von Positionen der Lagerbereichsidentifikationseinrichtungen (106) und der Lagergüteridentifikationseinrichtungen (108) zum Ermitteln eines Datensatzes ausgebildet ist, der für jedes der Lagergüter (102) und für jeden der Lagerbereiche (104) indikativ dafür ist, welches Lagergut (102) an welchem Lagerbereich (104) an welcher Position positioniert ist;
eine Erfasseinrichtung (114), die zum Erfassen von zumindest einen Teil der Lagerbereiche (104) und zumindest einen Teil der Lagergüter (102) abbildenden Erfassdaten, darstellend die Lagerbereichsidentifikationseinrichtungen (106) und die Lagergüteridentifikationseinrichtungen (108), als Basis für das Ermitteln des Datensatzes ausgebildet ist, wobei die Erfasseinrichtung (114) mindestens eine entlang der Lagerbereiche (104) und entlang der Lagergüter (102) verfahrbare und/oder schwenkbare Kamera zum Erfassen von Bilddaten und/oder mindestens ein entlang der Lagerbereiche (104) und entlang der Lagergüter (102) verfahrbares Transponderlesegerät zum Erfassen von Transponderdaten aufweist;
wobei die Ermittlungseinrichtung (110) ausgebildet ist, mittels Bilderkennung basierend auf mittels der mindestens einen Kamera erfassten Bilddaten zumindest einen Teil der Lagerbereiche (104) und zumindest einen Teil der Lagergüter (102) unter Verwendung der Lagerbereichsidentifikationseinrichtungen (106) und der Lagergüteridentifikationseinrichtungen (108) zu ermitteln.

2. Lagerverwaltungssystem (100) gemäß Anspruch 1, aufweisend zumindest eines der folgenden Merkmale:
aufweisend eine Abfrageeinrichtung (112), die eingerichtet ist, für jedes der Lagergüter (102) mittels einer Abfrage bei der Ermittlungseinrichtung (110) mindestens einen zugehörigen Lagerbereich (104) abzufragen, an dem ein jeweiliges Lagergut (102) positioniert ist und/oder für jeden der Lagerbereiche (104) mittels einer Abfrage bei der Ermittlungseinrichtung (110) mindestens ein zugehöriges Lagergut (102) abzufragen, das an dem jeweiligen Lagerbereich (104) positioniert ist;
wobei die Lagergüter (102) aus einer Gruppe ausgewählt sind, die besteht aus Werkzeugen, Fluidquellen, C-Teilen, Gutscheinen für eine Ware und/oder Dienstleistung und einem Dashbuttom;
wobei die Lagerbereiche (104) aus einer Gruppe ausgewählt sind, die besteht aus einem Regal oder einem Teil eines Regals, insbesondere einem Regalboden eines Regals, einem Werkstattwagen oder einem Teil eines Werkstattwagens, insbesondere einer Arbeitsfläche oder einer Schublade des Werkzeugwagens, einem Koffer oder einem Teil eines Koffers, insbesondere einem Kofferfach eines Koffers, einem wandmontierbaren Hängeplatz oder einem Teil eines wandmontierbaren Hängeplatzes, und einer Lagerbox oder einem Teil einer Lagerbox;
wobei die Lagergüteridentifikationseinrichtungen (108) aus einer Gruppe ausgewählt sind, die besteht aus einem Transponder, insbesondere einem RFID-Tag, einem optisch auslesbaren Code, insbesondere einem Barcode, einem QR-Code oder einem alphanumerischen Code, und einer vorbestimmten geometrischen Figur, insbesondere einer vorbestimmt eingefärbten geometrischen Figur;
aufweisend eine Benutzerschnittstelle (116) zum Anzeigen von zumindest einem Teil des Datensatzes und/oder zum Eingeben von zumindest einem Steuerkommando zum Steuern des Lagerverwaltungssystems (100), wobei insbesondere die Benutzerschnittstelle (116) zum Anzeigen von zumindest einem Teil des Datensatzes mittels Augmented Reality ausgebildet ist, weiter insbesondere an einer portablen Benutzerschnittstelle (116) oder einer tragbaren Benutzerschnittstelle (116);
wobei zumindest ein Teil der Lagerbereichsidentifikationseinrichtungen (106) an einer räumlichen Begrenzung eines zugeordneten der Lagerbereiche (104) angeordnet ist;
aufweisend eine Benutzerorteinrichtung (120), die zum Orten mindestens eines menschlichen Benutzers im Bereich des Lagerverwaltungssystems (100) und zum Steuern des Lagerverwaltungssystems (100) derart ausgebildet ist, dass bewegbare Komponenten des Lagerverwaltungssystems (100) nur unter Wahrung eines vorgebbaren Sicherheitsabstands zu einem georteten Benutzer positioniert werden;
wobei die Ermittlungseinrichtung (110) zum Ermitteln des Datensatzes derart ausgebildet ist, dass der Datensatz für jedes der Lagergüter (102) indikativ dafür ist, in welchem von mehreren Teilbereichen eines jeweiligen Lagerbereichs (104) das jeweilige Lagergut (102) positioniert ist.

3. Lagerverwaltungssystem (100) gemäß einem der Ansprüche 1 und 2, wobei die Ermittlungseinrichtung (110) eingerichtet ist, als zumindest einen Teil des Datensatzes für zumindest einen Teil der Lagergüter (102) und für zumindest einen Teil der Lagerbereiche (104) Raumkoordinaten zu identifizieren, insbesondere dreidimensionale Raumkoordinaten.

4. Lagerverwaltungssystem (100) gemäß einem der Ansprüche 1 bis 3, wobei die Ermittlungseinrichtung (110) eingerichtet ist, mittels der Erfasseinrichtung (114) erfasste und für zweidimensionale Raumkoordinaten von zumindest einem Teil der Lagergüter (102) und/oder von zumindest einem Teil der Lagerbereiche (104) indikative Daten in dreidimensionale Raumkoordinaten von zumindest einem Teil der Lagergüter (102) und/oder von zumindest einem Teil der Lagerbereiche (104) umzurechnen.

5. Lagerverwaltungssystem (100) gemäß Anspruch 3 oder 4, wobei die Ermittlungseinrichtung (110) eingerichtet ist, Raumkoordinaten der Lagergüter (102) Raumkoordinaten eines jeweils zugehörigen Lagerbereichs (104) zuzuordnen.

6. Lagerverwaltungssystem (100) gemäß einem der Ansprüche 1 bis 5, wobei die Erfasseinrichtung (114) eingerichtet ist, Erfassdaten ausschließlich in einem Raumbereich zu erfassen, der durch die Lagerbereiche (104) und Lagergüter (102) begrenzt wird.

7. Lagerverwaltungssystem (100) gemäß einem der Ansprüche 1 bis 6, aufweisend eine Nachbestelleinrichtung (118), die ausgebildet ist, eine Nachbestellung von zumindest einem der Lagergüter (102) auszulösen, wenn ein vorbestimmtes Nachbestellereignis erfasst wird.

8. Lagerverwaltungssystem (100) gemäß Anspruch 7, aufweisend zumindest eines der folgenden Merkmale:
wobei das Vorliegen eines Nachbestellereignisses mittels der Erfasseinrichtung (114) erfassbar ist;
wobei das Vorliegen eines Nachbestellereignisses in Form einer Benutzeraktivität, insbesondere mittels einer mittels der Erfasseinrichtung (114) erfassten vorbestimmten Benutzergeste, weiter insbesondere mittels einer auf ein nachzubestellendes Lagergut (102) und/oder einen einem nachzubestellenden Lagergut (102) zugehörigen Lagerbereich (104) zeigenden Benutzergeste, erfassbar ist;
wobei das vorbestimmte Nachbestellereignis aus einer Gruppe ausgewählt ist, die besteht aus dem Absinken einer Anzahl verbleibender Lagergüter (102) an mindestens einem zugeordneten Lagerbereich (104) unter einen vorbestimmten Schwellwert, einer für das Entnehmen mindestens einer vorbestimmten Anzahl von Lagergütern (102) aus mindestens einem zugeordneten Lagerbereich (104) indikativen Information, einem benutzerseitigen Nachbestellkommando und einer einen Entnahmebedarf anzeigenden Information.

9. Verfahren zum Verwalten eines Lagers mit einer Mehrzahl von mit Lagergütern (102) zu bestückenden Lagerbereichen (104) und einer Mehrzahl von Lagergütern (102), die an den Lagerbereichen (104) angeordnet sind, wobei eine jeweilige von einer Mehrzahl von Lagerbereichsidentifikationseinrichtungen (106) an einem zugeordneten der Lagerbereiche (104) positioniert ist, wobei zumindest ein Teil der Lagerbereichsidentifikationseinrichtungen (106) an einer räumlichen Begrenzung eines zugeordneten der Lagerbereiche (104) angeordnet wird, wobei die Lagerbereichsidentifikationseinrichtungen (106) aus einer Gruppe ausgewählt sind, die besteht aus einem Transponder, insbesondere einem RFID-Tag, einem optisch auslesbaren Code, insbesondere einem Barcode, einem QR-Code oder einem alphanumerischen Code, einer vorbestimmten geometrischen Figur, insbesondere einer vorbestimmt eingefärbten geometrischen Figur, und einer Anordnung mehrerer vorbestimmter geometrischer Figuren, insbesondere zur Definition äußerer Begrenzungen eines zugeordneten Lagerbereichs (104), und wobei eine jeweilige von einer Mehrzahl von Lagergüteridentifikationseinrichtungen (108) an einem zugeordneten der Lagergüter (102) positioniert ist, wobei das Verfahren aufweist:
Erkennen der Lagerbereichsidentifikationseinrichtungen (106) und der Lagergüteridentifikationseinrichtungen (108) und von Positionen der Lagerbereichsidentifikationseinrichtungen (106) und der Lagergüteridentifikationseinrichtungen (108);
Ermitteln eines Datensatzes basierend auf den erkannten Lagerbereichsidentifikationseinrichtungen (106) und Lagergüteridentifikationseinrichtungen (108) und ihrer Positionen durch eine in einem Prozessor (122) ausgebildete Ermittlungseinrichtung (110), wobei der Datensatz für jedes der Lagergüter (102) und für jeden der Lagerbereiche (104) indikativ dafür ist, welches Lagergut (102) an welchem Lagerbereich (104) an welcher Position positioniert ist;
Erfassen von zumindest einen Teil der Lagerbereiche (104) und zumindest einen Teil der Lagergüter (102) abbildenden Erfassdaten durch eine Erfasseinrichtung (114), darstellend die Lagerbereichsidentifikationseinrichtungen (106) und die Lagergüteridentifikationseinrichtungen (108), als Basis für das Ermitteln des Datensatzes, wobei die Erfasseinrichtung (114) mindestens eine entlang der Lagerbereiche (104) und entlang der Lagergüter (102) verfahrbare und/oder schwenkbare Kamera zum Erfassen von Bilddaten und/oder mindestens ein entlang der Lagerbereiche (104) und entlang der Lagergüter (102) verfahrbares Transponderlesegerät zum Erfassen von Transponderdaten aufweist;
wobei die Ermittlungseinrichtung (110) mittels Bilderkennung basierend auf mittels der mindestens einen Kamera erfassten Bilddaten zumindest einen Teil der Lagerbereiche (104) und zumindest einen Teil der Lagergüter (102) unter Verwendung der Lagerbereichsidentifikationseinrichtungen (106) und der Lagergüteridentifikationseinrichtungen (108) ermittelt.

10. Computerlesbares Speichermedium, in dem ein Programm zum Verwalten eines Lagers mit einer Mehrzahl von mit Lagergütern (102) zu bestückenden Lagerbereichen (104) und einer Mehrzahl von Lagergütern (102), die an den Lagerbereichen (104) angeordnet sind, gespeichert ist, welches Programm, wenn es von einem oder mehreren Prozessoren (122) ausgeführt wird, das Verfahren nach Anspruch 9 ausführt und/oder steuert.

11. Software-Programm zum Verwalten eines Lagers mit einer Mehrzahl von mit Lagergütern (102) zu bestückenden Lagerbereichen (104) und einer Mehrzahl von Lagergütern (102), die an den Lagerbereichen (104) angeordnet sind, welches Software-Programm, wenn es von einem oder mehreren Prozessoren (122) ausgeführt wird, das Verfahren nach Anspruch 9 ausführt und/oder steuert.

## Claims

1. Storage management system (100) comprising:
a plurality of storage regions (104) which are to be loaded with storage goods (102);
a plurality of storage goods (102) which are arranged at the storage regions (104);
a plurality of storage region identification units (106), each of which is positioned at an assigned one of the storage regions (104),
wherein at least a part of the storage region identification units (106) is arranged at a spatial boundary of an assigned one of the storage regions (104),
wherein the storage region identification units (106) are selected from a group which consists of a transponder, in particular a RFID-tag, ans optically readable code, in particular a barcode, a QR-code or an alphanumeric code, a predetermined geometric figure, in particular a predeterminedly colored geometric figure, and an arrangement of multiple predetermined geometric figures, in particular for a definition of outer boundaries of an assigned storage region (104);
a plurality of storage good identification units (108), each of which is positioned at an assigned one of the storage goods (102);
a determination unit (110) which is formed in a processor (122), which, by recognizing the storage region identification units (106) and the storage good identification units (108) and by recognizing positions of the storage region identification units (106) and the storage good identification units (108), is configured for determining a data set which, for each of the storage goods (102) and for each of the storage regions (104), is indicative for which storage good (102) is positioned at which storage region (104) at which position;
a capturing unit (114) which is configured for capturing capturing data which indicate at least a part of the storage regions (104) and at least a part of the storage goods (102), which capturing data represent the storage region identification units (106) and the storage good identification units (108) as basis for determining the data set, wherein the capturing unit (114) comprises at least one camera, which is displaceable along the storage regions (104) and along the storage goods (102) and/or which is pivotable, for capturing image data, and/or at least one transponder reading device which is displaceable along the storage regions (104) and along the storage goods (102) for capturing transponder data;
wherein the determination unit (110) is configured for, by image recognition based on image data which are captured by the at least one camera, determining at least a part of the storage regions (104) and at least a part of the storage goods (102) using the storage region identification units (106) and the storage good identification units (108).

2. Storage management system (100) according to claim 1, comprising at least one of the following features:
comprising a request unit (112) which is configured for, for each of the storage goods (102), requesting at least an assigned storage region (104) at which a respective storage good (102) is positioned, by a request at the determination unit (110), and/or, for each of the storage regions (104), requesting at least one assigned storage good (102) which is positioned at the respective storage region (104), by a request at the determination unit (110);
wherein the storage goods (102) are selected from a group which consists of tools, fluid sources, C-parts, vouchers for a good and/or service, and a dash button;
wherein the storage regions (104) are selected from a group which consists of a shelf or a part of a shelf, in particular a shelf board of a shelf, a workshop trolley or a part of a workshop trolley, in particular a working surface or a drawer of the workshop trolley, a suitcase or a part of a suitcase, in particular a suitcase compartment of a suitcase, a wall-mountable hanging space, and a storage box or a part of a storage box;
wherein the storage good identification units (108) are selected from a group which consists of a transponder, in particular a RFID-tag, an optically readable code, in particular a barcode, a QR-code, or an alphanumeric code, and a predetermined geometric figure, in particular a predeterminedly colored geometric figure;
comprising a user interface (116) for displaying at least a part of the data set and/or for inputting at least one control command for controlling the storage management system (100), wherein in particular the user interface (116) is configured for displaying at least a part of the data set by augmented reality, further in particular at a portable user interface (116) or a carryable user interface (116);
wherein at least a part of the storage region identification units (106) is arranged at a spatial boundary of an assigned one of the storage regions (104);
comprising a user location unit (120) which is configured for locating at least one human user in the region of the storage management system (100) and for controlling the storage management system (100), such that movable components of the storage management system (100) are positioned only while maintaining a pregivable security distance to a located user;
wherein the determination unit (110) is configured for determining the data set, such that the data set, for each of the storage goods (102), is indicative for in which of multiple partial regions of a respective storage region (104) the respective storage good (102) is positioned.

3. Storage management system (100) according to one of the claims 1 and 2, wherein the determination unit (110) is configured to identify spatial coordinates, in particular three-dimensional spatial coordinates, as at least a part of the data set for at least a part of the storage goods (102) and for at least a part of the storage regions (104).

4. Storage management system (100) according to one of the claims 1 to 3, wherein the determination unit (110) is configured to recalculate data, which are captured by the capturing unit (114) and which are indicative for two-dimensional spatial coordinates of at least a part of the storage goods (102) and/or of at least a part of the storage regions (104), in three-dimensional spatial coordinates of at least a part of the storage goods (102) and/or of at least a part of the storage regions (104).

5. Storage management system (100) according to claim 3 or 4, wherein the determination unit (110) is configured to assign spatial coordinates of the storage goods (102) to spatial coordinates of a respectively assigned storage region (104).

6. Storage management system (100) according to one of the claims 1 to 5, wherein the capturing unit (114) is configured to capture capturing data exclusively in a spatial region which is limited by the storage regions (104) and the storage goods (102).

7. Storage management system (100) according to one of the claims 1 to 6, comprising a reorder unit (118) which is configured to trigger a reorder of at least one of the storage goods (102), when a predetermined reorder event is captured.

8. Storage management system (100) according to claim 7, comprising at least one of the following features:
wherein the presence of a reorder event is capturable by the capturing unit (114);
wherein the presence of a reorder event is capturable in form of a user activity, in particular by a predetermined user gesture, which is captured by the capturing unit (114), further in particular by a user gesture which is pointing to a storage good (102) to be reordered and/or to a storage region (104) which is assigned to a storage good (102) to be reordered;
wherein the predetermined reorder event is selected from a group which consists of a decrease of a number of remaining storage goods (102) at at least one assigned storage region (104) under a predetermined threshold value, and an information which is indicative for the removal of at least a predetermined number of storage goods (102) from at least one assigned storage region (104), a reorder command by a user, and an information which is indicating a demand for removing.

9. Method of managing a storage with a plurality of storage regions (104) which are to be loaded with storage goods (102) and a plurality of storage goods (102) which are arranged at the storage regions (104), wherein a respective one of a plurality of storage region identification units (106) is positioned at an assigned one of the storage regions (104), wherein at least a part of the storage region identification units (106) is arranged at a spatial boundary of an assigned one of the storage regions (104), wherein the storage region identification units (106) are selected from a group which consists of a transponder, in particular a RFID-tag, an optically readable code, in particular a barcode, a QR-code, or an alphanumeric code, a predetermined geometric figure, in particular a predeterminedly colored geometric figure, and an arrangement of multiple predetermined geometric figures, in particular for a definition of outer boundaries of an assigned storage region (104), and wherein a respective one of a plurality of storage good identification units (108) is positioned at an assigned one of the storage goods (102), wherein the method comprises:
recognizing the storage region identification units (106) and the storage good identification units (108) and positions of the storage region identification units (106) and the storage good identification units (108);
determining a data set based on the recognized storage region identification units (106) and storage good identification units (108) and their positions by a determination unit (110) which is formed in a processor (122), wherein the data set, for each of the storage goods (102) and for each of the storage regions (104), is indicative for which storage good (102) is positioned at which storage region (104) at which position;
capturing capturing data which indicates at least a part of the storage regions (104) and at least a part of the storage goods (102) by a capturing unit (114), which capturing data represent the storage good identification units (106) and the storage good identification units (108), as basis for determining the data set, wherein the capturing unit (114) comprises at least one camera which is displaceable along the storage regions (104) and along the storage goods (102) and/or which is pivotable, for capturing image data, and/or at least one transponder reading device which is displaceable along the storage regions (104) and along the storage goods (102), for capturing transponder data;
wherein the determination unit (110) determines, by image recognition based on image data which are captured by the at least one camera, at least a part of the storage regions (104) and at least a part of the storage goods (102) using the storage region identification units (106) and the storage good identification units (108).

10. Computer-readable storage medium in which a program for managing a storage with a plurality of storage regions (104) which are to be loaded with storage goods (102) and a plurality of storage goods (102) which are arranged at the storage regions (104) is stored, which program, when it is executed by one or more processors (122), executes and/or controls the method according to claim 9.

11. Software-program for managing a storage with a plurality of storage regions (104) which are to be loaded with storage goods (102) and a plurality of storage goods (102) which are arranged at the storage regions (104), which software-program, when it is executed by one or more processors (122), executes and/or controls the method according to claim 9.

## Revendications

1. Système de gestion de stock (100), présentant :
une pluralité de zones de stockage (104) à charger de produits stockés (102) ;
une pluralité de produits stockés (102), qui sont disposés sur les zones de stockage (104) ;
une pluralité de dispositifs d'identification de zones de stockage (106), dont chacun est positionné sur une zone associée parmi les zones de stockage (104), dans lequel au moins une partie des dispositifs d'identification de zones de stockage (106) est disposée sur une délimitation spatiale d'une zone associée parmi les zones de stockage (104), dans lequel les dispositifs d'identification de zones de stockage (106) sont sélectionnés dans un groupe qui est constitué d'un transpondeur, en particulier d'une étiquette RFID, d'un code lisible optiquement, en particulier d'un code à barres, d'un code QR ou d'un code alphanumérique, d'une figure géométrique prédéfinie, en particulier d'une figure géométrique encrée de manière prédéfinie, et d'un agencement de plusieurs figures géométriques prédéfinies, en particulier pour la définition de délimitations extérieures d'une zone de stockage (104) associée ;
une pluralité de dispositifs d'identification de produits stockés (108), dont chacun est positionné sur un produit associé parmi les produits stockés (102) ;
un dispositif de détermination (110) réalisé dans un processeur (122), qui est réalisé pour déterminer au moyen de la reconnaissance des dispositifs d'identification de zones de stockage (106) et des dispositifs d'identification de produits stockés (108) et au moyen de la reconnaissance de positions des dispositifs d'identification de zones de stockage (106) et des dispositifs d'identification de produits stockés (108) un ensemble de données, qui indique pour chacun des produits stockés (102) et pour chacune des zones de stockage (104) quel produit stocké (102) est positionné sur quelle zone de stockage (104) dans quelle position ;
un dispositif d'acquisition (114), qui est réalisé pour acquérir des données d'acquisition reproduisant au moins une partie des zones de stockage (104) et au moins une partie des produits stockés (102), représentant les dispositifs d'identification de zones de stockage (106) et les dispositifs d'identification de produits stockés (108), comme base pour la détermination de l'ensemble de données, dans lequel le dispositif d'acquisition (114) présente au moins une caméra déplaçable et/ou pivotante le long des zones de stockage (104) et le long des produits stockés (102) pour l'acquisition de données d'image et/ou au moins un lecteur de transpondeur déplaçable le long des zones de stockage (104) et le long des produits stockés (102) pour l'acquisition de données de transpondeur ;
dans lequel le dispositif de détermination (110) est réalisé pour déterminer au moyen d'une reconnaissance d'image se basant sur des données d'image acquises au moyen de la au moins une caméra au moins une partie des zones de stockage (104) et au moins une partie des produits stockés (102) en utilisant les dispositifs d'identification de zones de stockage (106) et les dispositifs d'identification de produits stockés (108).

2. Système de gestion de stock (100) selon la revendication 1, présentant au moins l'une des caractéristiques suivantes :
présentant un dispositif d'interrogation (112), qui est conçu pour interroger pour chacun des produits stockés (102) au moyen d'une interrogation auprès du dispositif de détermination (110) au moins une zone de stockage (104) associée, sur laquelle un produit stocké (102) respectif est positionné et/ou pour interroger pour chacune des zones de stockage (104) au moyen d'une interrogation auprès du dispositif de détermination (110) au moins un produit stocké (102) associé, qui est positionné sur la zone de stockage (104) respective ;
dans lequel les produits stockés (102) sont sélectionnés dans un groupe qui est constitué d'outils, de sources de fluide, de pièces fabriquées simples, de coupons pour une marchandise et/ou un service et d'un dash button ;
dans lequel les zones de stockage (104) sont sélectionnées dans un groupe, qui est constitué d'un rayonnage ou d'une partie d'un rayonnage, en particulier d'un fond de rayonnage d'un rayonnage, d'un wagon-atelier ou d'une partie d'un wagon-atelier, en particulier d'une surface de travail ou d'un tiroir du wagon-atelier, d'un coffre ou d'une partie d'un coffre, en particulier d'un compartiment de coffre d'un coffre, d'un emplacement de suspension pouvant être monté sur un mur ou d'une partie d'un emplacement de suspension pouvant être monté sur un mur, et d'une boîte de stockage ou d'une partie d'une boîte de stockage ;
dans lequel les dispositifs d'identification de produits stockés (108) sont sélectionnés dans un groupe qui est constitué d'un transpondeur, en particulier d'une étiquette RFID, d'un code lisible optiquement, en particulier d'un code à barres, d'un code QR ou d'un code alphanumérique, et d'une figure géométrique prédéfinie, en particulier d'une figure géométrique encrée de manière prédéfinie ;
présentant une interface utilisateur (116) pour l'affichage d'au moins une partie de l'ensemble de données et/ou pour l'entrée d'au moins une instruction de commande pour la commande du système de gestion de stock (100), dans lequel en particulier l'interface utilisateur (116) est réalisée pour l'affichage d'au moins une partie de l'ensemble de données au moyen de la réalité augmentée, plus particulièrement sur une interface utilisateur (116) portable ou une interface utilisateur (116) portative ;
dans lequel au moins une partie des dispositifs d'identification de zones de stockage (106) est disposée sur une délimitation spatiale d'une zone associée parmi les zones de stockage (104) ;
présentant un dispositif de localisation d'utilisateur (120), qui est réalisé pour localiser au moins un utilisateur humain dans la zone du système de gestion de stock (100) et pour commander le système de gestion de stock (100) de telle sorte que les composants mobiles du système de gestion de stock (100) ne sont positionnés qu'avec conservation d'une distance de sécurité pouvant être prédéfinie par rapport à un utilisateur localisé ;
dans lequel le dispositif de détermination (110) est réalisé pour déterminer l'ensemble de données, de telle sorte que l'ensemble de données pour chacun des produits stockés (102) indique dans laquelle de plusieurs zones partielles d'une zone de stockage (104) respective le produit stocké (102) respectif est positionné.

3. Système de gestion de stock (100) selon l'une quelconque des revendications 1 et 2, **caractérisé en ce que** le dispositif de détermination (110) est conçu pour identifier en tant qu'au moins une partie de l'ensemble de données pour au moins une partie des produits stockés (102) et pour au moins une partie des zones de stockage (104) des coordonnées spatiales, en particulier des coordonnées spatiales tridimensionnelles.

4. Système de gestion de stock (100) selon l'une quelconque des revendications 1 à 3, **caractérisé en ce que** le dispositif de détermination (110) est conçu pour convertir des données acquises au moyen du dispositif d'acquisition (114) et indiquant les coordonnées spatiales bidimensionnelles d'au moins une partie des produits stockés (102) et/ou d'au moins une partie des zones de stockage (104) en coordonnées spatiales tridimensionnelles d'au moins une partie des produits stockés (102) et/ou d'au moins une partie des zones de stockage (104).

5. Système de gestion de stock (100) selon la revendication 3 ou 4, **caractérisé en ce que** le dispositif de détermination (110) est conçu pour associer les coordonnées spatiales des produits stockés (102) aux coordonnées spatiales d'une zone de stockage (104) respectivement associée.

6. Système de gestion de stock (100) selon l'une quelconque des revendications 1 à 5, **caractérisé en ce que** le dispositif d'acquisition (114) est conçu pour acquérir des données d'acquisition exclusivement dans une zone spatiale qui est délimitée par les zones de stockage (104) et produits stockés (102).

7. Système de gestion de stock (100) selon l'une quelconque des revendications 1 à 6, présentant un dispositif de réorganisation (118), qui est réalisé pour déclencher une réorganisation d'au moins un des produits stockés (102), lorsqu'un événement de réorganisation prédéfini est acquis.

8. Système de gestion de stock (100) selon la revendication 7, présentant au moins l'une des caractéristiques suivantes :
dans lequel la présence d'un événement de réorganisation peut être acquise au moyen du dispositif d'acquisition (114) ;
dans lequel la présence d'un événement de réorganisation sous forme d'une activité utilisateur, en particulier au moyen d'un geste utilisateur prédéfini acquis au moyen du dispositif d'acquisition (114), plus particulièrement au moyen d'un geste utilisateur désignant un produit stocké (102) à réorganiser et/ou une zone de stockage (104) associée à un produit stocké (102) à réorganiser, peut être acquise ;
dans lequel l'événement de réorganisation prédéfini est sélectionné dans un groupe qui est constitué de la baisse d'un nombre de produits stockés (102) restants sur au moins une zone de stockage (104) associée au-dessous d'une valeur de seuil prédéfinie, d'une information indiquant le prélèvement d'au moins un nombre prédéfini de produits stockés (102) d'au moins une zone de stockage (104) associée, d'une instruction de réorganisation côté utilisateur et d'une information montrant une demande de prélèvement.

9. Procédé pour gérer un stock avec une pluralité de zones de stockage (104) à remplir de produits stockés (102) et une pluralité de produits stockés (102), qui sont disposés sur les zones de stockage (104), **caractérisé en ce qu'**un respectif d'une pluralité de dispositifs d'identification de zones de stockage (106) est positionné sur une zone associée parmi les zones de stockage (104), dans lequel au moins une partie des dispositifs d'identification de zones de stockage (106) est disposée sur une délimitation spatiale d'une zone associée parmi les zones de stockage (104), dans lequel les dispositifs d'identification de zones de stockage (106) sont sélectionnés dans un groupe qui est constitué d'un transpondeur, en particulier d'une étiquette RFID, d'un code lisible optiquement, en particulier d'un code à barres, d'un code QR ou d'un code alphanumérique, d'une figure géométrique prédéfinie, en particulier d'une figure géométrique encrée de manière prédéfinie, et d'un agencement de plusieurs figures géométriques prédéfinies, en particulier pour la définition de délimitations extérieures d'une zone de stockage (104) associée, et dans lequel un respectif d'une pluralité de dispositifs d'identification de produits stockés (108) est positionné sur un produit associé parmi les produits stockés (102), dans lequel le procédé présente :
la reconnaissance des dispositifs d'identification de zones de stockage (106) et des dispositifs d'identification de produits stockés (108) et de positions des dispositifs d'identification de zones de stockage (106) et des dispositifs d'identification de produits stockés (108) ;
la détermination d'un ensemble de données sur la base des dispositifs d'identification de zones de stockage (106) et dispositifs d'identification de produits stockés (108) reconnus et de leurs positions par un dispositif de détermination (110) réalisé dans un processeur (122), dans lequel l'ensemble de données pour chacun des produits stockés (102) et pour chacune des zones de stockage (104) indique quel produit stocké (102) est positionné sur quelle zone de stockage (104) dans quelle position ;
l'acquisition de données d'acquisition reproduisant au moins une partie des zones de stockage (104) et au moins une partie des produits stockés (102) par un dispositif d'acquisition (114), représentant les dispositifs d'identification de zones de stockage (106) et les dispositifs d'identification de produits stockés (108), comme base pour la détermination de l'ensemble de données, dans lequel le dispositif d'acquisition (114) présente au moins une caméra déplaçable et/ou pivotant le long des zones de stockage (104) et le long des produits stockés (102) pour l'acquisition de données d'image et/ou au moins un lecteur de transpondeur déplaçable le long des zones de stockage (104) et le long des produits stockés (102) pour l'acquisition de données de transpondeur ;
dans lequel le dispositif de détermination (110) détermine au moyen d'une reconnaissance d'image se basant sur des données d'image acquises au moyen de la au moins une caméra au moins une partie des zones de stockage (104) et au moins une partie des produits stockés (102) en utilisant les dispositifs d'identification de zones de stockage (106) et les dispositifs d'identification de produits stockés (108).

10. Support d'enregistrement lisible par ordinateur, **caractérisé en ce qu'**un programme pour gérer un stock avec une pluralité de zones de stockage (104) à remplir de produits stockés (102) et une pluralité de produits stockés (102), qui sont disposés sur les zones de stockage (104), est mis en mémoire, lequel programme, lorsqu'il est exécuté par un ou plusieurs processeurs (122), exécute et/ou commande le procédé selon la revendication 9.

11. Programme logiciel pour gérer un stock avec une pluralité de zones de stockage (104) à remplir de produits stockés (102) et une pluralité de produits stockés (102), qui sont disposés sur les zones de stockage (104), lequel programme logiciel, lorsqu'il est exécuté par un ou plusieurs processeurs (122), exécute et/ou commande le procédé selon la revendication 9.
